# EUROPÄISCHE PATENTSCHRIFT

(11) **EP 4 506 315 B1**
(45) Veröffentlichungstag und Bekanntmachung des Hinweises auf die Patenterteilung: **14.01.2026**
(21) Anmeldenummer: 23190222.2
(22) Anmeldetag: 08.08.2023
(51) Int. Cl.: C03B 37/014

(54) **VORRICHTUNG ZUR HALTERUNG EINES ROHRFÖRMIGEN SIO2-ROHLINGS IN EINEM AUSSENABSCHEIDEVERFAHREN SOWIE VERFAHREN ZUR HERSTELLUNG EINES ROHRFÖRMIGEN SIO2-ROHLINGS**
DEVICE FOR HOLDING A TUBULAR SIO2 BLANK IN AN EXTERNAL DEPOSITION METHOD AND METHOD FOR PRODUCING A TUBULAR SIO2 BLANK
DISPOSITIF DE MAINTIEN D'UNE ÉBAUCHE TUBULAIRE DE SIO2 DANS UN PROCÉDÉ DE DÉPÔT EXTERNE AINSI QUE PROCÉDÉ DE FABRICATION D'UNE ÉBAUCHE TUBULAIRE DE SIO2

(43) Veröffentlichungstag der Anmeldung: 12.02.2025
(73) Patentinhaber: Heraeus Quarzglas GmbH & Co. KG, 63450 Hanau (DE)
(72) Erfinder: LEHMANN, Walter, 63801 Kleinostheim (DE); BADEKE, Klaus-Uwe, 06803 Bitterfeld-Wolfen (DE)
(74) Vertreter: Heraeus IP

(56) Entgegenhaltungen:
- EP-A1- 3 584 023
- US-A1- 2014 106 094

## Beschreibung

### Technischer Hintergrund

Die vorliegende Erfindung betrifft eine Vorrichtung zur Herstellung eines rohrförmigen SiO₂-Rohlings in einem Außenabscheideverfahren, aufweisend:
- ein Substratrohr, das eine Substratrohr-Längsachse, eine Substratrohr-Länge, eine erste Substratrohr-Stirnseite, eine zweite Substratrohr-Stirnseite, eine Substratrohr-Außenmantelfläche, eine Substratrohr-Innenmantelfläche, einen Substratrohr-Außendurchmesser, einen Substratrohr-Innendurchmesser, eine Substratrohr-Wandstärke und eine durchgehende und koaxial zur Substratrohr-Längsachse verlaufende Durchgangsöffnung aufweist,
- und eine Substratrohr-Halterung, die eine Einspannvorrichtung umfasst, und die ausgelegt ist, das Substratrohr zu lagern und das Substratrohr um eine koaxial oder parallel zur Substratrohr-Längsachse verlaufende Rotationsachse zu rotieren.

Außerdem betrifft die Erfindung ein Verfahren zur Herstellung eines rohrförmigen SiO₂-Rohlings in einem Außenabscheideverfahren mit folgenden Verfahrensschritten:
(a) Bereitstellen eines Substratrohres, das eine Substratrohr-Längsachse, eine Substratrohr-Länge, eine erste Substratrohr-Stirnseite, eine zweite Substratrohr-Stirnseite, eine Substratrohr-Außenmantelfläche, eine Substratrohr-Innenmantelfläche, einen Substratrohr-Außendurchmesser und eine durchgehende und koaxial zur Substratrohr-Längsachse verlaufende Durchgangsöffnung aufweist,
(b) Lagern des Substratrohres in einer Substratrohr-Halterung, die eine Einspannvorrichtung umfasst,
(c) Rotieren des Substratrohres um eine koaxial oder parallel zur Substratrohr-Längsachse verlaufende Rotationsachse, und
(d) Abscheiden von SiO₂-Partikeln auf der Außenmantelfläche des Substratrohres mittels mindestens einem Abscheidebrenner unter Bildung des rohrförmigen SiO₂-Rohlings.

Bauteile aus synthetischem Quarzglas in Form von Vorformen, Rohren, Stäben, Flanschen, Platten, Ringen, Reaktoren, Tiegel und dergleichen werden in der Halbleiterfertigung und zur Herstellung optischer Fasern eingesetzt. Derartige Bauteile werden häufig aus rohrförmigen Rohlingen aus synthetischem Siliziumdioxid erzeugt, indem diese thermisch umformt und/oder mechanisch bearbeitet werden. Im Zuge von Produktivitätssteigerungen werden zunehmend größere Abmessungen derartiger Bauteile angestrebt, insbesondere größere Wandstärken und Innendurchmesser.

Für die Herstellung von rohrförmigen Rohlingen aus synthetisch erzeugtem Siliziumdioxid sind CVD-Verfahren (Chemical Vapor Deposition) bekannt, bei denen SiO₂-Partikel aus der Gasphase auf einem Substrat abgeschieden werden. Das unter der Kurzform "OVD" (Outside Vapor Deposition) bekannte CVD-Außenabscheideverfahren ist für die Herstellung von großvolumigen Rohlingen grundsätzlich geeignet. Dabei wird ein siliziumhaltiges Ausgangsmaterial in einer Reaktionszone mittels Flammhydrolyse oder Pyrolyse zu SiO₂-Partikeln umgesetzt und diese schichtweise auf dem Außenmantel eines um seine Längsachse rotierenden zylinderförmigen Substrats abgeschieden. Die Reaktionszone wird mittels einer Heizquelle erzeugt, wobei sich die Substrat-Längsachse und die Heizquelle relativ zueinander reversierend hin- und herbewegen. Das Substrat kann rohrförmig ausgeführt sein und wird hier und im Folgenden auch als "Substratrohr" bezeichnet. Das Substratrohr besteht beispielsweise aus SiC, SiSiC (reaktionsgebundenem siliciuminfiltrierten Siliciumcarbid), Al₂O₃ oder einem anderen keramischen Werkstoff oder aus Grafit und wird mittels einer drehbankähnlichen Vorrichtung, die hier auch als "Substratrohr-Halterung" bezeichnet wird, gehalten und um seine Längsachse rotiert.

Ergebnis dieses Abscheideprozesses ist ein im Wesentlichen zylindrischer, rohrförmiger SiO₂-Rohling, der je nach Temperatur beim Abscheideprozess entweder als poröser SiO₂-Körper vorliegt (im Folgenden auch als "Sootkörper" bezeichnet) oder als Körper aus mehr oder weniger transparentem Quarzglas. Im Fall eines porösen Sootkörpers wird dieser in einem separaten Verfahrensschritt zu einem Körper aus mehr oder weniger transparentem Quarzglas gesintert (der Sinterprozess wird auch als "Verglasen" bezeichnet). Aus dem Körper aus mehr oder weniger transparentem Quarzglas wird durch mechanische, chemische und/oder thermische Nachbearbeitung ein Bauteil aus synthetischem Quarzglas erhalten, wie zum Beispiel ein Vollzylinder, ein Hohlzylinder oder Teile dieser Komponenten, die selbst auch als Halbzeug für die Herstellung anderer Bauteile dienen können.

### Stand der Technik

Zur Herstellung eines SiO₂-Körpers aus synthetischem Siliziumdioxid mit großem Rohr-Innendurchmesser im Außenabscheideverfahren ist der Einsatz eines Substratrohres mit geeignetem Außendurchmesser und eine daran angepasste Substratrohr-Halterung erforderlich. Dabei stellt sich grundsätzlich das Problem, die Unterschiede im linearen thermischen Ausdehnungskoeffizienten (im Folgenden auch kurz bezeichnet als "Wärmeausdehnung" oder als "CTE" - Coefficient of Thermal Expansion) der Werkstoffe von SiO₂-Körper, Substratrohr und Substratrohr-Halterung möglichst zu kompensieren.

So verfügt beispielsweise die aus der EP 3 584 023 A1 bekannte Horizontaldrehmaschine zur Herstellung einer Vorform aus porösem Siliziumdioxid anhand des OVD-Verfahrens über einen Mechanismus zur Kompensation der Wärmeausdehnung in axialer Richtung. Dieser umfasst eine Einspannvorrichtung mit einem ersten, um die Rotationsachse rotierbaren Spannfutter, das eines der Enden des Substratrohres umgreift, und ein zweites Spannfutter, das das andere Ende des Substratrohres umgreift und das in Richtung der Rotationsachse hin- und herbewegbar ist. Diese Hin- und Herbeweglichkeit wird beispielsweise durch eine Rollenlagerung des zweiten Spannfutters ermöglicht, vorteilhafterweise ergänzt durch eine Federvorspannung, die der axialen Verlängerung infolge der Wärmeausdehnung entgegenwirkt.

Die KR 10-2452282 B1 beschreibt ein OVD-Außenabscheideverfahren zur Herstellung eines Quarzglasrohres und eine Vorrichtung dafür. Es wird ein stufenförmiges Substratrohr vorgeschlagen, das aus einem zylinderförmigen Ablagerungsteil mit großem Außendurchmesser gebildet wird, an das sich beidseitig nach außen ragende Einspannteile mit kleinerem Außendurchmesser anschließen, die in die Spannbacken einer Horizontal-Glasdrehmaschine passen. Das Ablagerungsteil und die beidseitigen Einspannteile können einstückig ausgeführt sein, oder das Ablagerungsteil ist mit den beidseitigen Einspannteilen verbunden. Als Verbindungsmittel werden Schrauben, Stifte und Rastverbindungen genannt, und alternativ Ausführungsformen, bei denen die Stützteil oder das Ablageteil mit einem Schraubgewinde versehen sind und im Schraubverfahren verbunden werden. Im OVD-Abscheideprozess wird auf der Zylindermantelfläche des Ablagerungsteils ein SiO₂-Sootkörper erzeugt, während dieses mittels der beiderseitigen Einspannteile um eine Rotationsachse rotiert wird.

Die US 2014/106094 A1 beschreibt Verfahren zur Herstellung eines hohlen, zylindrischen, porösen Körpers aus synthetischem, glasartigem Siliziumdioxid-Ruß durch Aufdampfen von außen auf einen Dorn, bei denen die Temperatur des Dorns so gesteuert wird, dass sie während des gesamten Abscheidungsprozesses im Wesentlichen konstant ist.

Die EP 3 584 023 A1 beschreibt eine horizontale Drehmaschine zur Herstellung einer porösen optischen Faservorform, wobei die horizontale Drehmaschine so konfiguriert ist, dass sie zwei gegenüberliegende Enden eines Targets so hält und fixiert, dass eine Längsrichtung des Targets eine im Wesentlichen horizontale Richtung ist, und bewirkt, dass das Target um eine zu seiner Längsrichtung parallele Achse als Rotationsachse gedreht wird, und einen Mechanismus zum Absorbieren thermischer Ausdehnung aufweist, der so konfiguriert ist, dass er eine Änderung der Abmessung des Targets absorbiert, wobei die Änderung auf thermische Ausdehnung des Targets in einer Richtung der Rotationsachse zurückzuführen ist.

### Technische Aufgabe

Das Substratrohr erhitzt sich beim OVD-Außenabscheideverfahren außen stärker als innen. Die dabei auftretenden mechanischem Spannungen summieren sich über die Wandstärke auf und können zum Bruch führen. Bei geringem Substratrohrdurchmesser von beispielsweise weniger als 80mm und kleiner Substratrohrlänge von beispielsweise weniger als 2000mm sind die CTE-Unterschiede nicht so gravierend und wirken sich fast ausschließlich in axialer Richtung (in Richtung der Substratrohr-Längsachse) aus. Bei großen und dickwandigen Substratrohren mit beispielsweise einem Innendurchmesser von mehr als 200mm und einer Wanddicke von mehr als 25mm ist die radiale Wärmeausdehnung aber nicht mehr vernachlässigbar. Diese Substratrohre haben außerdem ein hohes Gewicht, was die Anforderungen an Stabilität und Dynamik der Substratrohr-Halterung erhöht.

Der Reaktionsbereich, in dem der Abscheideprozess stattfindet, hat in der Regel eine im Vergleich zur Substratrohr-Länge kürzere axiale Abmessung. Das an beiden Enden eingespannte Substratrohr wird nur in dem schmalen Längenabschnitt des Abscheidebereichs erwärmt, aber nicht so stark an den in der Substratrohr-Halterung gehaltenen Endbereichen. Auch die thermischen Spannungen zwischen den kälteren Endbereichen und der heißeren Rohrmitte können das Substratrohr zum Reißen bringen.

Bei Vorrichtungen zur Herstellung großvolumiger, rohrförmiger Rohlinge aus synthetischem Siliziumdioxid anhand eines OVD-Außenabscheideverfahrens und entsprechend großen Vorrichtungs-Komponenten, erschweren Gewicht, lokale Temperaturunterschiede innerhalb einer Komponente und CTE-Unterschiede verschiedener, miteinander verbundener Komponenten zunehmend das Herstellungsverfahren.

Der Erfindung liegt daher die Aufgabe zugrunde, eine Vorrichtung bereitzustellen, die mindestens einige der oben genannten Nachteile vermeidet, und die insbesondere geeignet ist zur reproduzierbaren und betriebssicheren Halterung eines großvolumigen, rohrförmigen SiO₂-Rohlings anhand eines Außenabscheideverfahrens, insbesondere eines OVD-Außenabscheideverfahrens.

Insbesondere liegt der Erfindung die Aufgabe zugrunde, eine Vorrichtung zur Halterung eines dickwandigen rohrförmigen Rohlings mit einem großen Innendurchmesser, beispielsweise mit einem Außendurchmesser von mehr als 200mm und einer großen Wandstärke mehr als 25mm, in einem Außenabscheideverfahren bereitzustellen, die geeignet ist, mechanische Spannungen infolge Maßabweichungen und Kalibrierungs-, Ausrichtungs- und Justagefehlern bei Komponenten der Vorrichtung sowie infolge von CTE-Unterschieden von Komponenten in axialer Richtung und in radialer Richtung zu vermeiden oder zu kompensieren.

Außerdem liegt der Erfindung die Aufgabe zugrunde, ein Verfahren zur Herstellung eines rohrförmigen Rohlings, insbesondere aus synthetischem Siliziumdioxid mit einem großen Innendurchmesser und einer großen Wandstärke nach dem Außenabscheideverfahren anzugeben, insbesondere mit einem Rohr-Innendurchmesser von mehr als 200mm und mit einer Rohr-Wandstärke von mehr als 25mm, das die oben genannten Nachteile vermeidet, und bei dem insbesondere die Gefahr von Ausschuss vermindert ist.

### Allgemeine Beschreibung der Erfindung

Hinsichtlich der Vorrichtung wird diese Aufgabe ausgehend von einer Vorrichtung der eingangs genannten Gattung erfindungsgemäß dadurch gelöst, dass die Substratrohr-Halterung einen Klemmmechanismus umfasst, der eine an der ersten Substratrohr-Stirnseite anliegende erste Andruckeinheit, eine an der zweiten Substratrohr-Stirnseite anliegende zweite Andruckeinheit und mindestens ein Kraftelement aufweist, das zur Erzeugung einer axialen Anpresskraft mit einer in Richtung der Substratrohr-Längsachse wirkenden Kraftkomponente ausgelegt ist, die ein Einklemmen des Substratrohrs zwischen der ersten Andruckeinheit und der zweiten Andruckeinheit bewirkt.

Das Substratrohr ist dazu ausgelegt, auf seiner Außenmantelfläche einen rohrförmigen SiO₂-Körper, insbesondere aus synthetischem Siliziumdioxid, mit großem Innendurchmesser anhand eines Außenabscheideverfahrens zu tragen. Der rohrförmige SiO₂-Körper ist beispielsweise ein SiO₂-Sootkörper oder er ist ein Körper aus teilweise oder vollständig dicht gesintertem Quarzglas.

Das Substratrohr hat beispielsweise eine Substratrohr-Länge bis zu 4m und ist über die gesamte Länge oder über eine Teillänge zylinderförmig, konisch oder stufig ausgeführt. Die Innenkontur ist über die Substratrohr-Länge konstant oder sie verändert sich.

Das Substratrohr kann nach Abschluss des Abscheideprozesses in dem Verbund aus Substratrohr und SiO₂-Rohling verbleiben oder es wird aus dem Substratrohr-Rohling-Verbund entfernt. Ein Substratrohr, das im Substratrohr-SiO₂-Körper-Verbund verbleibt, kann Bestandteil des SiO₂-Rohlings werden; es besteht beispielsweise aus Quarzglas.

Ein Substratrohr, das im Substratrohr-SiO₂-Körper-Verbund verbleibt und Bestandteil des SiO₂-Rohlings wird, hat vorzugsweise einen Innendurchmesser von mindestens 250mm. Seine Wandstärke liegt gegebenenfalls bevorzugt im Bereich von 4mm bis 10mm.

Ein Substratrohr, das nach dem Abscheideprozess oder zu einem späteren Verfahrensstand aus dem Substratrohr-SiO₂-Körper-Verbund entfernt wird, besteht vorzugsweise aus SiC, SiSiC, Al₂O₃ oder einem anderen keramischen Werkstoff oder aus Grafit. Es hat vorzugsweise einen Außendurchmesser von mindestens 250mm. Seine Wandstärke liegt gegebenenfalls bevorzugt im Bereich von 5 bis 30mm.

Die Wandstärke des Substratrohres ist somit klein bezogen auf seinen Außendurchmesser und beträgt vorzugsweise weniger als 20% des Substratrohr-Außendurchmessers. Dadurch hat das Substratrohr einerseits ein geringes Gewicht, was die Dynamik der Rotationsbewegung verringert und die Handhabung und Ausrichtung erleichtert, und andererseits hat es eine geringe thermische Masse, was die Wärmeableitung und die Ausbildung thermischer Spannungen innerhalb der Wandung gering hält.

Andererseits ist die Wandstärke des Substratrohres groß genug, um einen großvolumigen SiO₂-Körper tragen zu können. Daher beträgt die Wandstärke des Substratrohres bevorzugt mindestens 1% des Substratrohr-Außendurchmessers.

Die Wandstärke "W_{S}" (in mm) kann auch von der Substratrohr-Länge abhängen. Es ist vorteilhaft, wenn mit zunehmender Länge des Substratrohres auch die Wandstärke zunimmt. Daher kann W_{S} alternativ in Abhängigkeit vom Substratrohr-Außendurchmesser D_{S} (in mm) unter zusätzlicher Berücksichtigung der Substratrohr-Länge "L_{S}" (in mm) auch wie folgt eingestellt werden: W_{S}<0,2*(L_{S}/2000mm)*D_{S}.

Die Substratrohr-Halterung zur Lagerung und Rotation des Substratrohres umfasst die Einspannvorrichtung und einen Klemmmechanismus mit zwei Andruckeinheiten, von denen jeweils eine an einer der Stirnseiten des Substratrohres anliegt. Der Klemmmechanismus bewirkt, dass das Substratrohr durch Anlegen einer axialen Klemmkraft an seine beiderseitigen Stirnseiten eingeklemmt wird. Für dieses axiale Einklemmen genügt die anliegende axiale Klemmkraft und im einfachsten Fall eine allein auf Reibung beruhende Kraftschlussverbindung zwischen dem Substratrohr und den an den Stirnseiten anliegenden Andruckeinheiten. Durch den Wegfall der ansonsten dafür üblichen Formschluss- oder Stoffschlussverbindung zwischen Substratrohr und Einspannvorrichtung ergibt sich ein zusätzlicher Freiheitsgrad für Bewegungen des Substratrohres in radialer Richtung und insoweit eine gewisse mechanische Entkopplung des Substratrohres von der Einspannvorrichtung selbst dann, wenn die Andruckeinheiten fest mit der Einspannvorrichtung verbunden sind. Dadurch können im Verlauf des Abscheideprozesses auftretende, thermisch bedingte Durchmesseränderungen des Substratrohres kompensiert werden, beziehungsweise können diese Durchmesseränderungen zugelassen werden, ohne dass sich mechanische Spannungen zwischen der Einspannvorrichtung und dem Substratrohr aufbauen.

Der Klemmmechanismus kann auch zur Kompensation thermischer Ausdehnung in Richtung der Substratrohr-Längsachse beitragen.

Vorzugsweise umfassen die erste Andruckeinheit und die zweite Andruckeinheit jeweils eine an der jeweiligen Substratrohr-Stirnseite anliegende Andruckfläche, die aus einem grafithaltigen Material besteht. Das grafithaltige Material ist vergleichsweise weich und kann Stöße und Impulse abfangen. Dies wird weiter unten noch näher erläutert.

Die beiderseitigen Andruckeinheiten übertragen sowohl die Rotationsbewegung der Einspannvorrichtung als auch die in Richtung der Substratrohr-Längsachse wirkende Komponente der vom mindestens einen Kraftelement erzeugten Anpresskraft auf die Substratrohr-Stirnseiten. Auch die Rotationsbewegung des Substratrohres ist im einfachsten Fall allein durch die axiale Kraftschlussverbindung (Haftreibung) zwischen dem Substratrohr und den an den Substratrohr-Stirnseiten anliegenden Andruckeinheiten erreichbar. Dafür ist lediglich eine ausreichend hohe Anpresskraft erforderlich. Unterstützend können an der Substratrohr-Stirnseite und/oder an einer oder an beiden der daran anliegenden Andruckeinheiten Mitnehmerelemente vorgesehen sein, die einen Formschluss für die Rotationsbewegung bewirken und die oben erwähnten zusätzlichen Freiheitsgrad für Bewegungen des Substratrohres in radialer Richtung nicht eliminieren.

Die beiderseitigen Andruckeinheiten selbst bestehen jeweils aus einer Komponente oder aus mehreren Komponenten. Sie sind im bevorzugten Fall baugleich. Die unmittelbar an den Substratrohr-Stirnseiten anliegenden Komponenten haben beispielsweise Plattenform, Ringform oder bilden Kugel- oder Ellipsoid-Segmente. Die an den Substratrohr-Stirnseiten anliegenden Flächen sind im einfachsten Fall eben; sie können auch gekrümmt oder stufig ausgebildet sein.

Die erste und die zweite Andruckeinheit werden infolge der Wirkung des mindestens einen Kraftelements gegeneinander gepresst, so dass die Andruckeinheiten eine axiale Anpresskraft auf das Substratrohr ausüben, die zur Lagerung und Rotationsbewegung des Substratrohres ausreicht. Dafür genügt es, wenn das mindestens eine Kraftelement auf nur eine der beiden Andruckeinheiten einwirkt, so dass diese Andruckeinheit die Anpresskraft auf die jeweilige Substratrohr-Stirnseite überträgt; gegebenenfalls bildet die andere - in Richtung der Substratrohr-Längsachse gegenüberliegende - Andruckeinheit, ein passives Widerlager, ohne dass dafür ein weiteres Kraftelement erforderlich ist.

Bei einer bevorzugten Ausführungsform der Vorrichtung umfasst die Einspannvorrichtung eine um die Rotationsachse rotierbare erste Spindel und eine der ersten Spindel in Richtung der Substratrohr-Längsachse axial gegenüberliegende und um die Rotationsachse rotierbare zweite Spindel, wobei die erste Spindel an der ersten Andruckeinheit drehfest aber schwenkbar gelagert oder angelenkt ist und auf diese die axiale Anpresskraft überträgt, und wobei die zweite Spindel an der zweiten Andruckeinheit drehfest aber gegeneinander beweglich gelagert oder angelenkt ist und auf diese die axiale Anpresskraft überträgt.

Die erste Spindel (beispielsweise auf der linken Seite) und die zweite Spindel (beispielsweise an der rechten Seite) sind jeweils einer Andruckeinheit zugeordnet. Sie bilden mechanische Führungselemente für ihre jeweilige Andruckeinheit; sie übertragen die Rotationsbewegung der Einspannvorrichtung und die axiale Anpresskraft auf ihre jeweilige Andruckeinheit. Die Spindeln sind einteilig ausgeführt oder sie bestehen aus mehreren Bauteilen; im einfachsten Fall sind sie beispielsweise als Rohr, Vollstab oder Konus ausgebildet. Zur Kraftübertragung ist jede der beiden Spindeln mit ihrer jeweiligen Andruckeinheit verbunden. Die Verbindung ist drehfest aber sie erlaubt mindestens eine Schwenkbewegung.

Sie ist beispielsweise als Gelenk ausgeführt, wie etwa als Scharnier, Kugelgelenk, Kreuzgelenk oder Kardangelenk, oder als Festlager oder Loslager, wie beispielsweise als Kugellager, Kegellager, Wälzlager oder Kardanlager oder -halter. Durch diese schwenkbewegliche Verbindung zwischen Andruckeinheit und Spindel ergibt sich eine zusätzliche Entkopplung zwischen der Einspannvorrichtung und dem Substratrohr, die zur Kompensierung von Ausrichtungs-, Positionierungs- oder Maßabweichungen beiträgt. Beispielsweise können so nicht exakt senkrecht zur Substratrohr-Längsachse verlaufende Stirnseiten kompensiert und Taumelbewegungen durch nicht absolut exakte Zentrierung des Substratrohres ausgeglichen werden.

Im einfachsten und besonders bevorzugten Fall weist die erste Spindel ein freies, distales Ende auf, auf dem die erste Andruckeinheit schwenkbeweglich gelagert ist, und die zweite Spindel weist ebenfalls ein freies distales Ende auf, auf dem die zweite Andruckeinheit schwenkbeweglich gelagert ist.

Die beiden Spindeln übertragen somit einerseits die Anpresskraft und die Rotationsbewegung auf das Substratrohr und sie stützen andererseits die Andruckeinheiten ab. Diese sitzen auf dem jeweiligen distalen Spindelende auf.

Im Bereich des distalen Endes der ersten und zweiten Spindel ist vorteilhafterweise jeweils mindestens ein Stützelement angeordnet sein, auf dem die jeweilige Spindel abrollen kann. Das mindestens eine Stützelement dient zur Unterstützung der Spindel insbesondere bei hohem Gewicht von Substratrohr und SiO₂-Körper.

Besonders bevorzugt ist die schwenkbewegliche Verbindung zwischen Spindel und Andruckeinheit als Loslager ausgebildet und umfasst vorzugsweise einen kardanischen Kugel-Kegelsitz. Dabei ist der Sitz auf der Spindelseite kegelförmig ausgebildet und die darauf beweglich gelagerte Andruckeinheit weist einen mit dem Sitz zusammenwirkenden Kugel- oder Radienabschnitt auf - oder umgekehrt: der Sitz auf der Spindelseite weist einen konvex gekrümmten Kugel- oder Radienabschnitt auf, der mit der darauf beweglich gelagerten konkav gekrümmten Andruckeinheit korrespondiert.

Insbesondere bei sehr langen Substratrohren mit einer Länge von mehr als 2m kann eine zusätzliche Stabilisierung der Rotationsachse hilfreich sein. Im Hinblick darauf weist die Substratrohr-Halterung vorteilhafterweise eine Zentriereinheit auf, die mindestens einen rohr- oder stabförmigen Zentrierträger umfasst, der sich durch die Durchgangsöffnung des Substratrohres zwischen der ersten Andruckeinheit und der zweiten Andruckeinheit erstreckt.

Der Zentrierträger ist im Bereich der jeweiligen Andruckeinheiten vorzugsweise lose gelagert, und derart von den beiderseitigen Spindeln mechanisch entkoppelt, dass es die axiale Bewegung der Spindeln zum Ausgleich von Längenänderungen nicht behindert.

Dafür kann beispielsweise ein Gestänge eingesetzt werden, das sich durch die Durchgangsöffnung des Substratrohres von der einen Spindel zur gegenüberliegenden Spindel erstreckt. Das Gestänge besteht beispielsweise aus einer Stange oder aus mehreren Stangen, die jeweils um die Rotationsachse gleichmäßig verteilt und mit den beiderseitigen Spindeln unmittelbar oder mittelbar (über an der jeweiligen montiertes Zwischenelement) verbunden sind.

Alternativ oder ergänzend dazu ist bei einer besonders bevorzugten Ausführungsform vorgesehen, dass die erste Spindel als Hohlspindel mit einer ersten Innenbohrung ausgebildet ist, und dass die zweite Spindel als Hohlspindel mit einer zweiten Innenbohrung ausgebildet ist, und dass der Zentrierträger mit einem ersten Ende in die erste Innenbohrung und mit einem zweiten Ende in die zweite Innenbohrung hineinragt.

Die erste und die zweite Spindel sind hierbei als Hohlspindeln mit Innenbohrungen ausgeführt. Die Innenbohrungen sind entweder als Durchgangsbohrungen ausgeführt, oder die Hohlspindeln sind an ihrem proximalen Ende (der Einspannvorrichtung zugewandt) einseitig geschlossen. Im einfachsten Fall haben die Innenbohrungen einen kreisrunden Querschnitt, sie können aber auch einen von der Kreisform abweichenden Querschnitt aufweisen, wie beispielsweise einen ovalen oder einen polygonalen Querschnitt. Die Innenquerschnitt der ersten Hohlspindel und der der zweiten Hohlspindel sind gleich oder sie unterscheiden sich voneinander. Die Innenquerschnitte der Hohlspindeln sind an die jeweiligen Außenquerschnitte der Zentrierträger vorzugsweise im Sinne einer Spielpassung angepasst.

Der Zentrierträger, der Teil der Zentriereinheit ist, hat eine Zentrierträger-Längsachse und ist beispielsweise stab- oder rohrförmig ausgebildet. Er erstreckt sich vollständig durch die Durchgangsöffnung des Substratrohres hindurch, vorzugsweise endet er aber in den Innenbohrungen der beiderseitigen Hohlspindeln. In der jeweiligen Innenbohrung ist der Zentrierträger nach Art des Teleskopprinzips mit geringem radialem Spiel axial verschiebbar gelagert. Der Spalt zwischen der Innenwandung der Hohlspindel und der Außenwandung der Zentrierträgers ist so klein wie möglich und liegt vorzugsweise im Bereich weniger zehntel Millimeter, beispielsweise zwischen 0,2-0,5mm. Der Zentrierträger stützt sich somit an der Innenwand der Innenbohrungen beiderseitigen Hohlspindeln ab und er zentriert diese gleichzeitig zueinander in axialer Richtung im Sinne einer Koaxialität der Längsachsen von Zentrierträger und Hohlspindeln. Durch die Spielpassung wird einerseits eine Überbestimmtheit der Substratrohr-Lagerung vermieden, und andererseits wird eine axiale Führung erreicht, die einem gegenseitigen Verkippen oder Verdrehen der Hohlspindeln aus der Substratrohr-Längsachse entgegengewirkt.

Bei einer bevorzugten Ausführungsform des Zentrierträgers ist dieser innerhalb der beiderseitigen Hohlspindeln-Innenbohrungen frei drehbar und führt die Hohlspindeln-Rotationsbewegung nicht oder nur zum Teil mit aus. Bei einer anderen Ausführungsform des Zentrierträgers ist dieser innerhalb der Innenbohrungen der beiderseitigen Hohlspindeln-Innenbohrungen drehfest gelagert, so dass er sich mit den Hohlspindeln mitdreht. Die drehfeste Lagerung kann beispielsweise durch eine nicht kreisrunde Innengeometrie mindestens einer der Hohlspindeln erreicht werden - beispielsweise durch eine polygonale oder ovale Innengeometrie - und einer daran im Sinne einer Schlüssel-Schloss-Kombination angepassten Außenkontur des Zentrierträgers.

Bei einer bevorzugten Weiterbildung der Ausführungsform mit Zentrierträger ist dieser in der ersten Innenbohrung und in der zweiten Innenbohrung in axialer Richtung frei beweglich.

Der Zentrierträger endet hierbei innerhalb der jeweiligen Innenbohrungen und ist darin in axialer Richtung frei beweglich (abgesehen von Reibung). Durch die axiale Beweglichkeit des Zentrierträgers können Unterschiede in der thermischen Ausdehnung zwischen dem Zentrierträger und den Hohlspindeln ausgeglichen und somit thermisch bedingte Spannungen in der Substratrohr-Halterung vermieden werden.

Der freie Abstand "a" zwischen den sich gegenüberliegenden Hohlspindeln ist in der Regel konstant. Die Länge des Zentrierträgers L_{Z}" ist größer als dieser freie Abstand "a". Unter Umständen kann der Zentrierträger dennoch aus einer der Hohlspindeln-Innenbohrungen vollständig herausrutschen, wenn sein Bewegungsspielraum in axialer Richtung dafür ausreichend groß ist. Das Herausrutschen kann beispielsweise dadurch verhindert werden, dass die Länge des Zentrierträgers "L_{Z}" den freien Abstand "a" zuzüglich einer Zusatzlänge (La + Lb) umfasst, die die beidseitigen axialen Bewegungsspielräume in der ersten und in der zweiten Innenbohrung berücksichtigt.

Insbesondere im Hinblick auf die Wirkung des Zentrierträgers als axiale Führung für die beiderseitigen Hohlspindeln, ist es vorteilhaft, wenn sich der Zentrierträger über eine gewisse Erstreckungslänge La bzw. Lb in beide Hohlspindeln hineinerstreckt. Die Erstreckungslängen La bzw. Lb sind bevorzugt mindestens doppelt so groß wie der Innendurchmesser der jeweiligen Hohlspindel. Der Innendurchmesser der Hohlspindeln liegt vorzugsweise im Bereich von 40mm bis 100mm.

Andererseits kann es aus Stabilitätsgründen und insbesondere für eine möglichst effektive Führung der beiderseitigen Hohlspindeln mittels des Zentrierträgers auch vorteilhaft sein, den gesamten, also beiderseitigen axialen Bewegungsspielraum "B_{Z}" (Bₐ + B_{b}) des Zentrierträgers innerhalb der Hohlspindeln zu begrenzen und "B_{Z}" zwar so groß wie erforderlich, aber so klein wie möglich auszulegen. Im Hinblick darauf hat es sich bewährt, wenn für B_{Z} gilt: B_{Z}<20mm, vorzugsweise 5mm<B_{Z}<15mm.

Der gesamte axiale Bewegungsspielraum des Zentrierträgers innerhalb der Hohlspindeln in axialer Richtung ist auf wenige Millimeter begrenzt. Das genügt in der Regel für die Kompensation der CTE-Unterschiede zwischen Hohlspindeln und Zentrierträger in axialer Richtung. Die Begrenzung kann beispielsweise durch in die Hohlspindeln-Innenbohrung ragende Stopp-Elemente oder durch eine Verengung oder durch einen Verschluss der Hohlspindeln-Innenbohrung erfolgen.

Bei einer besonders bevorzugten Weiterbildung der Ausführungsform der Vorrichtung mit einem Zentrierträger ist vorgesehen, dass die Zentriereinheit Zentrierelemente umfasst, die innerhalb der Substratrohr-Durchgangsbohrung auf den Zentrierträger aufgesetzt sind, und von denen ein erstes Zentrierelement im Bereich der ersten Substratrohr-Stirnseite, und ein zweites Zentrierelement im Bereich der zweiten Substratrohr-Stirnseite angeordnet ist.

Die Zentrierelemente werden im Bereich beider Enden in die Substratrohr-Durchgangsbohrung eingesetzt. Sie dienen zur Führung des Substratrohres und als "Absturzsicherung" gegen ein Abrutschen. Dementsprechend haben sie eine Außenkontur, die an die Innenkontur der Substratrohr-Durchgangsbohrung angepasst ist. Sie sind beispielsweise als Kreisring, Polygonring oder sternförmig mit nach außen weisenden Stützarmen ausgeführt. Der Durchmesser des Hüllkreises um das Zentrierelement ist kleiner als der Innendurchmesser der Substratrohr-Durchgangsbohrung. An die Außenkontur des Zentrierträgers ist die Innenkontur der Zentrierelemente vorzugsweise so angepasst, dass diese auf dem Zentrierträger mit Spielpassung verschiebbar aufsitzen. Beispielsweise ist bei einer kreisrunden Konfiguration der Innendurchmesser der Zentrierelemente um 0,5 bis 2mm größer als der Außendurchmesser des Zentrierträgers.

Die Zentrierelemente erleichtern die Montage der Substratrohr-Halterung und sie vermindern beim Einsatz im Abscheideprozess die Gefahr eines Abrutschens des Substratrohrrohres aus der axialen Klemmung. Zur Verminderung der Durchbiegung des Substratrohres kann im Bereich zwischen den endständigen Zentrierelementen mindestens ein weiteres Zentrierelement angeordnet sein. Die Zentrierelemente bestehen vorzugsweise aus Grafit oder aus einem anderen grafithaltigen Werkstoff.

Der herzustellende SiO₂-Rohling besteht in der Regel aus synthetischem Siliziumdioxid, dessen CTE gering ist. Er variiert je nach Zusammensetzung und Herstellungsmethode und liegt bei Raumtemperatur bei etwa 0,5 µm/m/°K (0,5x10⁻⁶/°K). Als Werkstoff für die Spindeln wird vorzugsweise ein Metall gewählt. Metalle zeichnen sich grundsätzlich durch ihre Fähigkeit zur Absorption von mechanischer Energie bei plastischer Verformung aus (Zähigkeit) und sind insoweit in der Lage, mechanische Impulse beim Abscheideprozess zu kompensieren. Besonders bevorzugt sind Metalle mit hoher chemischer Beständigkeit, wie beispielsweise Edelstahl (mit einem CTE im Bereich von 10 µm/m/°K bis 17 µm/m/°K je nach Legierung), und/oder Metalle mit einem zu Siliziumdioxid vergleichbaren thermischen Ausdehnungskoeffizienten, wie beispielsweise unter der Sammelbezeichnung "INVAR" bekannte Eisen-Nickellegierungen, deren CTE typischerweise im Bereich von 1,2 µm/m/°K oder darunter liegen.

Der mindestens eine Abscheidebrenner erzeugt eine Brennerflamme, deren heißeste Stelle in der Regel räumlich vor oder auf der Oberfläche des abzuscheidenden SiO₂-Körpers liegt. Der Bereich um diese heißeste Stelle wird auch als "Reaktionsbereich" bezeichnet.

Im Hinblick darauf ist bei einer bevorzugten Ausführungsform der Vorrichtung die maximale Abmessung der Spindeln in radialer Richtung, wie beispielsweise der Außendurchmesser bei kreisrundem Spindeln-Querschnitt, deutlich kleiner als der Substratrohr-Außendurchmesser; beispielsweise ist er um mindestens 100mm kleiner. Dadurch ist gewährleistet, dass die Spindeln außerhalb des "Reaktionsbereich" des Abscheidebrenners beziehungsweise der Abscheidebrenner liegen.

Die Vorrichtung hat eine erste Seite (beispielsweise die linke Seite) und eine zweite Seite (beispielsweise die rechte Seite). Sofern sich die folgenden Ausführungen nur auf die erste dieser beiden Seiten beziehen, so ist die zweite Seite im Wesentlichen baugleich oder äquivalent zur ersten Seite ausgebildet, wenn nicht ausdrücklich etwas anderes gesagt wird.

Es hat sich bewährt, wenn die erste Andruckeinheit ein erstes Druckübertragungselement und ein damit drehfest verbundenes und vorzugsweise aus einem grafithaltigen Material bestehendes, erstes Pufferelement aufweist, wobei das Druckübertragungselement an der ersten Spindel drehfest aber schwenkbar gelagert oder angelenkt ist, und wobei das erste Pufferelement zwischen dem Druckübertragungselement und dem Substratrohr angeordnet ist und an der ersten Substratrohr-Stirnseite anliegt.

Das erste Druckübertragungselement ist Teil der ersten Andruckeinheit. Es ist dazu ausgelegt, die vom mindestens einen Kraftelement erzeugte axiale Anpresskraft auf die erste Substratrohr-Stirnseite zu übertragen, beziehungsweise als Widerlager für die erste Substratrohr-Stirnseite zu dienen, wenn die vom Kraftelement erzeugte axiale Anpresskraft auch oder ausschließlich auf die zweite Substratrohr-Stirnseite einwirkt. Das Druckübertragungselement wirkt unmittelbar oder mittelbar (das heißt über ein Zwischenelement) mit der ersten Spindel zusammen, an der oder auf der es drehfest aber schwenkbar gelagert oder angelenkt ist. Beispielsweise weist das Druckübertragungselement eine zentrale Öffnung mit einem umlaufenden Öffnungsrand auf, der auf der ersten Spindel aufsitzt. Das Druckübertragungselement besteht vorzugsweise aus Metall, beispielsweise aus Edelstahl.

Das Pufferelement ist zwischen dem Druckübertragungselement und der ersten Substratrohr-Stirnseite angeordnet. Es dient einerseits zur Verbesserung der Klemmwirkung und andererseits dazu, Impulse in axialer oder azimutaler Richtung abzufangen, die ansonsten auf die vergleichsweise stoßempfindliche Stirnseite einwirken könnten. Das Pufferelement ist beispielsweise ringförmig oder sternförmig ausgebildet. Es hat vorzugsweise eine geringe Härte und erlaubt das Einwirken einer vergleichsweise hohen Anpresskraft ohne Beschädigung der Substratrohr-Stirnseite, und es erzeugt eine ausreichend hohe Reibung, so dass die Rotationsbewegung übertragen wird. Ein geeigneter Werkstoff ist beispielsweise Grafit, der aufgrund seiner Schmiereigenschaft einen radialen Schlupf der Rohrstirnflächen auf dem Grafit ermöglicht und somit eine radiale thermische Ausdehnung des Substratrohres zulässt, aber immer noch genug Reibungskraft besitzt, um die Impulse und Kräfte bei azimutaler Beschleunigung zu übertragen.

Der Kraftfluss der Anpresskraft ist hier: Kraftelement (beispielsweise ein federbelastetes Spannfutter) **→** erste Andruckeinheit mit erster Spindel **→** Gelenk/schwenkbewegliches Lager **→** erstes Druckübertragungselement **→** erstes Pufferelement **→** erste Substratrohr-Stirnseite.

Das erste Pufferelement kann als Stufen-Ringscheibe ausgebildet sein, die einen hohlzylinderförmigen Abschnitt mit einem nach außen ragenden Flansch aufweist, wobei der Flansch an der ersten Substratrohr-Stirnseite anliegt und der hohlzylinderförmige Abschnitt in die Substratrohr-Durchgangsbohrung hineinragt. Das stufenscheibenförmige Pufferelement untergreift dabei die Substratrohr-Innenwand mit geringem Spiel und dient gleichzeitig als Zentrierelement. Dies ist eine Möglichkeit, um die Position des ersten Zentrierelements im Bereich der ersten Substratrohr-Stirnseite zu gewährleisten, wenn dies erforderlich oder vorteilhaft erscheint. Das Zentrierelement und das Pufferelement sind bei dieser Ausführungsform einteilig ausgeführt.

Andererseits ist das Pufferelement hohen Kräften ausgesetzt und kann vergleichsweise schnell verschleißen. Außerdem ist es vorteilhaft, wenn das Zentrierelement und das Pufferelement thermisch entkoppelt werden können, beispielsweise durch einen Spalt. Als Verschleißteil ist das Pufferelement bevorzugt einfach und kostengünstig austauschbar. Im Hinblick darauf hat es sich als günstig erweisen, wenn das erste Zentrierelement mit dem ersten Pufferelement lösbar und drehfest verbunden ist.

Dies ist eine weitere Möglichkeit, um die Position des ersten Zentrierelements im Bereich der ersten Substratrohr-Stirnseite zu gewährleisten, wenn dies erforderlich oder vorteilhaft erscheint. Die lösbare Verbindung ist beispielsweise mittels Schrauben ausgeführt. Das Pufferelement kann dadurch einfach ausgetauscht werden, beispielsweise im Fall von Verschleiß. Die Drehfestigkeit wird auch durch eine lediglich lockere Verbindung zwischen Pufferelement und Zentrierelement gewährleistet, die einerseits ein mechanisches Spiel erlaubt und die andererseits einen Spalt zwischen Pufferelement und Zentrierelement zur thermischen Entkopplung frei lässt. In dem Fall sind beispielsweise Schrauben vorgesehen, die mit Spiel in Bohrungen im Pufferelement und im Zentrierelement geführt sind, so dass die gelenkige Verbindung zwischen der jeweiligen Spindel und dem Andruckeinheit nicht behindert wird. Die Schrauben bewirken einen Formschluss für die Rotationsbewegung und können insoweit als Mitnehmerelemente für die Rotationsbewegung des Substratrohres dienen.

Bei der Ausstattung der Vorrichtung mit einem ersten Pufferelement hat sich auch als vorteilhaft erwiesen, wenn dieses das Druckübertragungselement und das Substratrohr in radialer Richtung überragt.

Während des OVD-Außenabscheideverfahrens trifft die Flamme des mindestens einen Abscheidebrenners auf die Mantelfläche des Substratrohres beziehungsweise auf die des sich bildenden SiO₂-Körpers und kann danach seitlich abgelenkt werden, so dass sie sich tangential zur Körper-Mantelfläche in Richtung der Endbereiche des SiO₂-Körpers ausbreitet. Infolge des radialen Überstandes des Pufferelements gegenüber dem Druckübertragungselement befindet sich letzteres im Flammenschatten, und ist dadurch vor thermischer und korrosiver Beanspruchung weitgehend geschützt, der andererseits das Pufferelement ausgesetzt ist. Die Höhe des radialen Überstandes liegt vorzugsweise im Bereich von 1cm bis 3cm.

Bei einer bevorzugten Ausführungsform der erfindungsgemäßen Vorrichtung umfasst die Substratrohr-Halterung einen Kompensationsmechanismus zur Kompensation thermischer Ausdehnung in Richtung der Substratrohr-Längsachse. Der Kompensationsmechanismus und der Klemmmechanismus können gemeinsame Komponenten haben. Beispielsweise umfasst der Kompensationsmechanismus in der Regel ein Federelement, wobei bevorzugt das Kraftelement des Klemmmechanismus ebenfalls ein Federelement umfasst, das gleichzeitig Bestandteil des Kompensationsmechanismus ist. Das Federelement ist somit sowohl eine Komponente des Kompensationsmechanismus als auch eine Komponente des Klemmmechanismus der Substratrohr-Halterung. Das Federelement ist beispielsweise als einseitig oder beidseitig federgelagertes Spannfutter ausgeführt.

Hinsichtlich des Verfahrens zur Herstellung eines SiO₂-Rohlings wird die oben angegebene technische Aufgabe ausgehend von einem Verfahren der eingangs genannten Gattung erfindungsgemäß dadurch gelöst, dass mittels der Substratrohr-Halterung auf die erste Stirnseite und auf die zweite Stirnseite eine axiale Anpresskraft mit einer in Richtung der Substratrohr-Längsachse wirkenden Kraftkomponente erzeugt wird, die ein Einklemmen des Substratrohrs zwischen einer an der ersten Stirnseite anliegenden ersten Andruckeinheit und einer an der zweiten Stirnseite anliegenden zweiten Andruckeinheit bewirkt.

Das Verfahren umfasst einen Verfahrensschritt, bei dem anhand eines Außenabscheideverfahrens ein rohrförmiger SiO₂-Rohling, insbesondere aus synthetischem Siliziumdioxid, erzeugt wird. Je nach Temperatur beim Abscheideprozess wird auf der Mantelfläche des Substratrohres entweder ein poröser SiO₂-Sootkörper erzeugt oder ein mehr oder weniger transparenter, glasiger SiO₂-Körper. Im Fall eines porösen SiO₂-Sootkörpers kann dieser einer Dehydratationsbehandlung in Inertgas, chlorhaltigem Gas oder unter Vakuum unterzogen werden, um den Hydroxylgruppengehalt des Quarzglases zu verringern, bevor er zu dem mehr oder weniger transparenten, glasigen SiO₂-Körper gesintert wird. Das Sintern (oder Verglasen) erfolgt beispielsweise unter Vakuum oder in einer Helium und/oder Wasserstoff und/oder Stickstoff enthaltenden Atmosphäre.

Das Substratrohr hat beispielsweise eine Substratrohr-Länge bis zu 4m und ist über die gesamte Länge oder über eine Teillänge zylinderförmig, konisch oder stufig ausgeführt. Es ist dazu ausgelegt, auf seiner Außenmantelfläche einen rohrförmigen SiO₂-Körper aus synthetischem Siliziumdioxid mit großem Innendurchmesser anhand eines OVD-Außenabscheideverfahrens zu erzeugen. Der nach diesem Verfahrensschritt erhaltene SiO₂-Rohling hat beispielsweise folgende Abmessungen: einen Innendurchmesser im Bereich von 250mm bis 650mm, eine Wandstärke im Bereich von 25mm bis 150mm und eine Länge im Bereich von 800mm bis 3800mm. Durch mechanische, chemische und/oder thermische Bearbeitung wird daraus ein Bauteil aus synthetischem Quarzglas erhalten, beispielsweise ein Quarzglasrohr oder ein Quarzglasring.

Das Verfahren ermöglicht somit unter anderem die Herstellung eines großvolumigen Quarzglasrohres mit einem Innendurchmesser von mindestens 250mm und mit einer Wandstärke von mindestens 25mm.

Vorzugsweise wird zum Lagern des Substratrohres gemäß Verfahrensschritt (b) die Substratrohrhalterung der erfindungsgemäßen Vorrichtung eingesetzt. Dies wird nachfolgend näher erläutert:
Das Substratrohr kann nach Abschluss des Abscheideprozesses in dem Verbund aus Substratrohr und SiO₂-Körper verbleiben oder es wird aus dem Substratrohr- SiO₂-Körper -Verbund entfernt. Ein Substratrohr, das im Substratrohr- SiO₂-Körper -Verbund verbleibt, kann Bestandteil des SiO₂-Rohlings werden; es besteht beispielsweise aus Quarzglas. Ein Substratrohr, das im Substratrohr- SiO₂-Körper -Verbund verbleibt und Bestandteil des SiO₂-Rohlings wird, hat vorzugsweise einen Innendurchmesser von mindestens 250mm. Seine Wandstärke liegt gegebenenfalls bevorzugt im Bereich von 4 bis 10mm. Ein Substratrohr, das nach dem Abscheideprozess oder zu einem späteren Verfahrensstand aus dem Substratrohr- SiO₂-Körper -Verbund entfernt wird, besteht vorzugsweise aus SiC, SiSiC, Al₂O₃ oder einem anderen keramischen Werkstoff oder aus Grafit. Es hat vorzugsweise einen Außendurchmesser von mindestens 250mm. Seine Wandstärke liegt gegebenenfalls bevorzugt im Bereich von 5 bis 30mm.

Die Wandstärke des Substratrohres ist somit klein bezogen auf seinen Außendurchmesser und beträgt in der Regel weniger als 20% des Substratrohr-Außendurchmessers. Dadurch hat das Substratrohr einerseits ein geringes Gewicht, was die Dynamik der Rotationsbewegung verringert und die Handhabung und Ausrichtung erleichtert, und andererseits hat es eine geringe thermische Masse, was die Wärmeableitung und die Ausbildung thermischer Spannungen innerhalb der Wandung gering hält.

Andererseits ist die Wandstärke des Substratrohres groß genug, um einen großvolumigen SiO₂-Körper tragen zu können. Daher beträgt die Wandstärke des Substratrohres bevorzugt mindestens als 1% des Substratrohr-Außendurchmessers. Die bevorzugte Wandstärke "W_{S}" (in mm) kann auch von der Substratrohr-Länge abhängen. Es ist vorteilhaft, wenn mit zunehmender Länge des Substratrohres auch die Wandstärke zunimmt. Daher kann W_{S} in Abhängigkeit vom Substratrohr-Außendurchmesser D_{S} (in mm) unter zusätzlicher Berücksichtigung der Substratrohr-Länge "L_{S}" (in mm) auch wie folgt eingestellt werden: W_{S}<0,2*(L_{S}/2000mm)*D_{S}.

Die Substratrohr-Halterung wird zur Lagerung und Rotation des Substratrohres eingesetzt. Sie umfasst die Einspannvorrichtung und einen Klemmmechanismus mit zwei Andruckeinheiten, von denen jeweils eine an einer der Stirnseiten des Substratrohres anliegt. Der Klemmmechanismus bewirkt, dass das Substratrohr durch Anlegen einer axialen Klemmkraft an seine beiderseitigen Stirnseiten eingeklemmt wird.

Die drehfeste Lagerung und Rotation wird durch ein Einklemmen des Substratrohrs zwischen einer an der ersten Stirnseite anliegenden ersten Andruckeinheit und einer an der zweiten Stirnseite anliegenden zweiten Andruckeinheit bewirkt. Zu diesem Zweck ist die Substratrohr-Halterung dazu ausgelegt, auf die erste Stirnseite und auf die zweite Stirnseite eine axiale Anpresskraft mit einer in Richtung der Substratrohr-Längsachse wirkenden Kraftkomponente zu erzeugen. Die axiale Anpresskraft wirkt auf die erste und/oder auf die zweite Andruckeinheit mit einer in Richtung der Substratrohr-Längsachse wirkenden Kraftkomponente. Diese Anpresskraft wird mittels der Andruckeinheiten auf die Stirnseiten des Substratrohres übertragen, so dass das Substratrohr zwischen den beiderseitigen Andruckeinheiten eingeklemmt und drehfest gehalten wird. Für das axiale Einklemmen genügt die anliegende axiale Klemmkraft und im einfachsten Fall eine allein auf Reibung beruhende Kraftschlussverbindung zwischen dem Substratrohr und den an den Stirnseiten anliegenden Andruckeinheiten. Durch den Wegfall der ansonsten dafür üblichen Formschluss- oder Stoffschlussverbindung zwischen Substratrohr und Einspannvorrichtung ergibt sich ein zusätzlicher Freiheitsgrad für Bewegungen des Substratrohres in radialer Richtung und insoweit eine gewisse mechanische Entkopplung des Substratrohres von einer Einspannvorrichtung, selbst dann, wenn die Andruckeinheiten fest mit der Einspannvorrichtung verbunden sind. Dadurch können im Verlauf des Abscheideprozesses auftretende, thermisch bedingte Durchmesseränderungen kompensiert werden, beziehungsweise können diese Durchmesseränderungen zugelassen werden, ohne dass sich mechanische Spannungen zwischen der Einspannvorrichtung und dem Substratrohr aufbauen.

Der Klemmmechanismus kann auch zur Kompensation thermischer Ausdehnung in Richtung der Substratrohr-Längsachse beitragen.

Die beiderseitigen Andruckeinheiten übertragen sowohl die Rotationsbewegung der Einspannvorrichtung als auch die in Richtung der Substratrohr-Längsachse wirkende Komponente der vom mindestens einen Kraftelement erzeugten Anpresskraft auf die Substratrohr-Stirnseiten. Auch die Rotationsbewegung des Substratrohres ist im einfachsten Fall allein durch die axiale Kraftschlussverbindung (Haftreibung) zwischen dem Substratrohr und den an den Substratrohr-Stirnseiten anliegenden Andruckeinheiten erreichbar. Dafür ist lediglich eine ausreichend hohe Anpresskraft erforderlich. Unterstützend können an der Substratrohr-Stirnseite und/oder an einer oder an beiden der daran anliegenden Andruckeinheiten Mitnehmerelemente vorgesehen sein, die einen Formschluss für die Rotationsbewegung bewirken und die den oben erwähnten zusätzlichen Freiheitsgrad für Bewegungen des Substratrohres in radialer Richtung nicht eliminieren.

Die beiderseitigen Andruckeinheiten selbst bestehen jeweils aus einer Komponente oder aus mehreren Komponenten. Sie sind im bevorzugten Fall baugleich. Die unmittelbar an den Substratrohr-Stirnseiten anliegenden Komponenten haben beispielsweise Plattenform, Ringform oder bilden Kugel- oder Ellipsoid-Segmente. Die an den Substratrohr-Stirnseiten anliegenden Flächen sind im einfachsten Fall eben; sie können auch gekrümmt oder stufig ausgebildet sein.

Die erste und die zweite Andruckeinheit werden infolge der Wirkung des mindestens einen Kraftelements gegeneinander gepresst, so dass die Andruckeinheiten eine axiale Anpresskraft auf das Substratrohr ausüben, die zur Lagerung und Rotationsbewegung des Substratrohres ausreicht. Dafür genügt es, wenn das mindestens eine Kraftelement auf nur eine der beiden Andruckeinheiten einwirkt, so dass diese Andruckeinheit die Anpresskraft auf die jeweilige Substratrohr-Stirnseite überträgt; gegebenenfalls bildet die andere - in Richtung der Substratrohr-Längsachse gegenüberliegende - Andruckeinheit, ein passives Widerlager, ohne dass dafür ein weiteres Kraftelement erforderlich ist.

Bei einer bevorzugten Verfahrensweise wird die axiale Anpresskraft auf die erste Andruckeinheit mittels einer mit einer Einspannvorrichtung verbundenen und um die Rotationsachse rotierbaren ersten Spindel und die axiale Anpresskraft auf die zweite Andruckeinheit mittels einer mit der Einspannvorrichtung verbundenen und um die Rotationsachse rotierbaren zweiten Spindel erzeugt, wobei die erste Spindel an der ersten Andruckeinheit drehfest aber schwenkbar gelagert oder angelenkt ist, und wobei die zweite Spindel an der zweiten Andruckeinheit drehfest aber gegeneinander beweglich gelagert oder angelenkt ist.

Die erste Spindel und die zweite Spindel bilden mechanische Führungselemente und sie sind jeweils einer Andruckeinheit zugeordnet. Sie übertragen die Rotationsbewegung der Einspannvorrichtung und die axiale Anpresskraft auf ihre jeweilige Andruckeinheit. Die Spindeln sind einteilig ausgeführt oder sie bestehen aus mehreren Bauteilen; im einfachsten Fall sind sie beispielsweise als Rohr, Vollstab oder Konus ausgebildet. Zur Kraftübertragung ist jede der beiden Spindeln mit ihrer jeweiligen Andruckeinheit verbunden. Die Verbindung ist drehfest aber sie erlaubt mindestens eine Schwenkbewegung.

Sie ist beispielsweise als Gelenk ausgeführt, wie etwa als Scharnier, Kugelgelenk, Kreuzgelenk oder Kardangelenk, oder als Festlager oder Loslager, wie beispielsweise als Kugellager, Kegellager, Wälzlager oder Kardanlager oder -halter. Durch diese schwenkbewegliche Verbindung zwischen Andruckeinheit und Spindel ergibt sich eine zusätzliche Entkopplung zwischen der Einspannvorrichtung und dem Substratrohr, die zur Kompensierung von Ausrichtungs-, Positionierungs- oder Maßabweichungen beiträgt. Beispielsweise können so nicht exakt senkrecht zur Substratrohr-Längsachse verlaufende Stirnseiten kompensiert und Taumelbewegungen durch nicht absolut exakte Zentrierung des Substratrohres ausgeglichen werden.

Im einfachsten und besonders bevorzugten Fall weist die erste Spindel ein freies, distales Ende auf, auf dem die erste Andruckeinheit schwenkbeweglich gelagert ist, und die zweite Spindel weist ebenfalls ein freies distales Ende auf, auf dem die zweite Andruckeinheit schwenkbeweglich gelagert ist.

Die beiden Spindeln übertragen somit einerseits die Anpresskraft und die Rotationsbewegung auf das Substratrohr und sie stützen andererseits die Andruckeinheiten ab. Diese sitzen auf dem jeweiligen distalen Spindelende auf.

Im Bereich des distalen Endes der ersten und zweiten Spindel ist vorteilhafterweise jeweils mindestens ein Stützelement angeordnet sein, auf dem die jeweilige Spindel abrollen kann. Das mindestens eine Stützelement dient zur Unterstützung der Spindel insbesondere bei hohem Gewicht von Substratrohr und SiO₂-Körper.

Besonders bevorzugt ist die schwenkbewegliche Verbindung zwischen Spindel und Andruckeinheit als Loslager ausgebildet und umfasst vorzugsweise einen kardanischen Kugel-Kegelsitz. Dabei ist der Sitz auf der Spindelseite kegelförmig ausgebildet und die darauf beweglich gelagerte Andruckeinheit weist einen mit dem Sitz zusammenwirkenden Kugel- oder Radienabschnitt auf - oder umgekehrt: der Sitz auf der Spindelseite weist einen Kugel- oder Radienabschnitt auf, der mit der darauf beweglich gelagerten konkav gekrümmten Andruckeinheit korrespondiert.

Insbesondere bei sehr langen Substratrohren mit einer Länge von mehr als 2m kann eine zusätzliche Stabilisierung der Rotationsachse hilfreich sein.

Im Hinblick darauf wird vorteilhafterweise eine Substratrohr-Halterung eingesetzt, die eine Zentriereinheit aufweist, die mindestens einen rohr- oder stabförmigen Zentrierträger umfasst, der sich durch die Durchgangsöffnung des Substratrohres zwischen der ersten Andruckeinheit und der zweiten Andruckeinheit erstreckt.

Der Zentrierträger ist im Bereich der jeweiligen Andruckeinheiten vorzugsweise lose gelagert, und derart von den beiderseitigen Spindeln mechanisch entkoppelt, dass es die axiale Bewegung der Spindeln zum Ausgleich von Längenänderungen nicht behindert.

Dafür kann beispielsweise ein Gestänge eingesetzt werden, das sich durch die Durchgangsöffnung des Substratrohres von der einen Spindel zur gegenüberliegenden Spindel erstreckt. Das Gestänge besteht beispielsweise aus zwei oder mehr Stangen, die jeweils um die Rotationsachse gleichmäßig verteilt und mit den beiderseitigen Spindeln unmittelbar oder mittelbar (über an der jeweiligen montiertes Zwischenelement) verbunden sind.

Alternativ oder ergänzend dazu ist bei einer besonders bevorzugten Verfahrensweise vorgesehen, dass die erste Spindel als Hohlspindel mit einer ersten Innenbohrung ausgebildet ist, und dass die zweite Spindel als Hohlspindel mit einer zweiten Innenbohrung ausgebildet ist, und dass der Zentrierträger mit einem ersten Ende in die erste Innenbohrung und mit einem zweiten Ende in die zweite Innenbohrung hineinragt.

Die erste und die zweite Spindel sind hierbei als Hohlspindeln mit Innenbohrungen ausgeführt. Die Innenbohrungen sind entweder als Durchgangsbohrungen ausgeführt, oder die Hohlspindeln sind an ihrem proximalen Ende (der Einspannvorrichtung zugewandt) einseitig geschlossen. Im einfachsten Fall haben die Innenbohrungen einen kreisrunden Querschnitt, sie können aber auch einen von der Kreisform abweichenden Querschnitt aufweisen, wie beispielsweise einen ovalen oder einen polygonalen Querschnitt. Die Innenquerschnitt der ersten Hohlspindel und der der zweiten Hohlspindel sind gleich oder sie unterscheiden sich voneinander. Die Innenquerschnitte der Hohlspindeln sind an die jeweiligen Außenquerschnitte der Zentrierträger vorzugsweise im Sinne einer Spielpassung angepasst.

Der Zentrierträger, der Teil der Zentriereinheit ist, hat eine Zentrierträger-Längsachse und ist beispielsweise stab- oder rohrförmig ausgebildet. Er erstreckt sich vollständig durch die Durchgangsöffnung des Substratrohres hindurch, vorzugsweise endet er aber in den Innenbohrungen der beiderseitigen Hohlspindeln. In der jeweiligen Innenbohrung ist der Zentrierträger nach Art des Teleskopprinzips mit geringem radialem Spiel axial verschiebbar gelagert. Der Spalt zwischen der Innenwandung der Hohlspindel und der Außenwandung der Zentrierträgers ist so klein wie möglich und liegt vorzugsweise im Bereich weniger zehntel Millimeter, beispielsweise zwischen 0,2-0,5mm. Der Zentrierträger stützt sich somit an der Innenwand der Innenbohrungen beiderseitigen Hohlspindeln ab und er zentriert diese gleichzeitig zueinander in axialer Richtung im Sinne einer Koaxialität der Längsachsen von Zentrierträger und Hohlspindeln. Durch die Spielpassung wird einerseits eine Überbestimmtheit der Substratrohr-Lagerung vermieden, und andererseits wird eine axiale Führung erreicht, die einem gegenseitigen Verkippen oder Verdrehen der Hohlspindeln aus der Substratrohr-Längsachse entgegengewirkt.

Bei einer bevorzugten Verfahrensweise ist der Zentrierträger innerhalb der beiderseitigen Hohlspindeln-Innenbohrungen frei drehbar und führt die Hohlspindeln-Rotationsbewegung nicht oder nur zum Teil mit aus. Bei einer anderen Verfahrensweise ist der Zentrierträgers innerhalb der Innenbohrungen der beiderseitigen Hohlspindeln-Innenbohrungen drehfest gelagert, so dass er sich mit den Hohlspindeln mitdreht. Die drehfeste Lagerung kann beispielsweise durch eine nicht kreisrunde Innengeometrie mindestens einer der Hohlspindeln erreicht werden - beispielsweise durch eine polygonale oder ovale Innengeometrie - und einer daran im Sinne einer Schlüssel-Schloss-Kombination angepassten Außenkontur des Zentrierträgers.

Bei einer bevorzugten Weiterbildung der Verfahrensweise unter Einsatz eines Zentrierträgers ist dieser in der ersten Innenbohrung und in der zweiten Innenbohrung in axialer Richtung frei beweglich.

Der Zentrierträger endet hierbei innerhalb der jeweiligen Innenbohrungen und ist darin in axialer Richtung frei beweglich (abgesehen von Reibung). Durch die axiale Beweglichkeit des Zentrierträgers können Unterschiede der thermischen Ausdehnung zwischen Zentrierträger und Hohlspindeln ausgeglichen und somit thermisch bedingte Spannungen in der Substratrohr-Halterung vermieden werden.

Der freie Abstand "a" zwischen den sich gegenüberliegenden Hohlspindeln ist in der Regel konstant. Die Länge des Zentrierträgers L_{Z}" ist größer als dieser freie Abstand "a". Unter Umständen kann der Zentrierträger dennoch aus einer der Hohlspindeln-Innenbohrungen vollständig herausrutschen, wenn sein Bewegungsspielraum in axialer Richtung dafür ausreichend groß ist. Das Herausrutschen kann beispielsweise dadurch verhindert werden, dass die Länge des Zentrierträgers "L_{Z}" den freien Abstand "a" zuzüglich einer Zusatzlänge (La + Lb) umfasst, die die beidseitigen axialen Bewegungsspielräume in der ersten und in der zweiten Innenbohrung berücksichtigt.

Insbesondere im Hinblick auf die Wirkung des Zentrierträgers als axiale Führung für die beiderseitigen Hohlspindeln, ist es vorteilhaft, wenn sich der Zentrierträger über eine gewisse Erstreckungslänge La bzw. Lb in beide Hohlspindeln hineinerstreckt. Die Erstreckungslängen La bzw. Lb sind bevorzugt mindestens doppelt so groß wie der Innendurchmesser der jeweiligen Hohlspindel. Der Innendurchmesser der Hohlspindeln liegt vorzugsweise im Bereich von 40mm bis 100mm.

Andererseits kann es aus Stabilitätsgründen und insbesondere für eine möglichst effektive Führung der beiderseitigen Hohlspindeln mittels des Zentrierträgers auch vorteilhaft sein, den gesamten, also beiderseitigen axialen Bewegungsspielraum "B_{Z}" des Zentrierträgers innerhalb der Hohlspindeln zu begrenzen und "B_{Z}" zwar so groß wie erforderlich, aber so klein wie möglich auszulegen. Im Hinblick darauf hat es sich bewährt, wenn für B_{Z} gilt: B_{Z}<20mm, vorzugsweise 5mm<B_{Z}<15mm.

Der gesamte axiale Bewegungsspielraum des Zentrierträgers innerhalb der Hohlspindeln in axialer Richtung ist auf wenige Millimeter begrenzt. Das genügt in der Regel für die Kompensation der CTE-Unterschiede zwischen Hohlspindeln und Zentrierträger in axialer Richtung. Die Begrenzung kann beispielsweise durch in die Hohlspindeln-Innenbohrung ragende Stopp-Elemente oder durch eine Verengung oder durch einen Verschluss der Hohlspindeln-Innenbohrung erfolgen.

Bei einer besonders bevorzugten Weiterbildung der Verfahrensweise unter Einsatz eines Zentrierträgers ist vorgesehen, dass die Zentriereinheit Zentrierelemente umfasst, die innerhalb der Substratrohr-Durchgangsbohrung auf den Zentrierträger aufgesetzt sind, und von denen ein erstes Zentrierelement im Bereich der ersten Substratrohr-Stirnseite, und ein zweites Zentrierelement im Bereich der zweiten Substratrohr-Stirnseite angeordnet ist.

Die Zentrierelemente werden im Bereich beider Enden in die Substratrohr-Durchgangsbohrung eingesetzt. Sie dienen zur Führung des Substratrohres und als "Absturzsicherung" gegen ein Abrutschen. Dementsprechend haben sie eine Außenkontur, die an die Innenkontur der Substratrohr-Durchgangsbohrung angepasst ist. Sie sind beispielsweise als Kreisring, Polygonring oder sternförmig mit nach außen weisenden Stützarmen ausgeführt. Der Durchmesser des Hüllkreises um das Zentrierelement ist kleiner als der Innendurchmesser der Substratrohr-Durchgangsbohrung.

An die Außenkontur des Zentrierträgers ist die Innenkontur der Zentrierelemente vorzugsweise so angepasst, dass diese auf dem Zentrierträger mit Spielpassung verschiebbar aufsitzen. Beispielsweise ist bei einer kreisrunden Konfiguration der Innendurchmesser der Zentrierelemente um 0,5 bis 2mm größer als der Außendurchmesser des Zentrierträgers.

Die Zentrierelemente erleichtern die Montage der Substratrohr-Halterung und sie vermindern beim Einsatz im Abscheideprozess die Gefahr eines Abrutschens des Substratrohrrohres aus der axialen Klemmung. Zur Verminderung der Durchbiegung des Substratrohres kann im Bereich zwischen den endständigen Zentrierelementen mindestens ein weiteres Zentrierelement angeordnet sein. Die Zentrierelemente bestehen vorzugsweise aus Grafit oder aus einem anderen grafithaltigen Werkstoff.

Der herzustellende SiO₂-Rohling besteht aus synthetischem Siliziumdioxid, dessen CTE gering ist. Er variiert je nach Zusammensetzung und Herstellungsmethode und liegt bei Raumtemperatur bei etwa 0,5 µm/m/°K (0,5x10⁻⁶/°K). Als Werkstoff für die Spindeln wird vorzugsweise ein Metall gewählt. Metalle zeichnen sich grundsätzlich durch ihre Fähigkeit zur Absorption von mechanischer Energie bei plastischer Verformung aus (Zähigkeit) und sind insoweit in der Lage, mechanische Impulse beim Abscheideprozess zu kompensieren. Besonders bevorzugt sind Metalle mit hoher chemischer Beständigkeit, wie beispielsweise Edelstahl (mit einem CTE im Bereich von 10 µm/m/°K bis 17 µm/m/°K je nach Legierung), und/oder Metalle mit einem zu Siliziumdioxid vergleichbaren thermischen Ausdehnungskoeffizienten, wie beispielsweise unter der Sammelbezeichnung "INVAR" bekannte Eisen-Nickellegierungen, deren CTE typischerweise im Bereich von 1,2 µm/m/°K oder darunter liegen.

Der mindestens eine Abscheidebrenner erzeugt eine Brennerflamme, deren heißeste Stelle in der Regel räumlich vor oder auf der Oberfläche des abzuscheidenden SiO₂-Körpers liegt. Der Bereich um diese heißeste Stelle wird auch als "Reaktionsbereich" bezeichnet.

Im Hinblick darauf ist bei einer bevorzugten Verfahrensweise die maximale Abmessung der Spindeln in radialer Richtung, wie beispielsweise der Außendurchmesser bei kreisrundem Spindeln-Querschnitt, deutlich kleiner als der Substratrohr-Außendurchmesser; beispielsweise ist er um mindestens 100mm kleiner. Dadurch ist gewährleistet, dass die Spindeln außerhalb des "Reaktionsbereichs" des mindestens einen Abscheidebrenners liegen.

Die Vorrichtung zur Durchführung des Verfahrens hat eine erste Seite (beispielsweise die linke Seite) und eine zweite Seite (beispielsweise die rechte Seite). Sofern sich die folgenden Ausführungen nur auf die erste dieser beiden Seiten beziehen, so ist die zweite Seite im Wesentlichen baugleich oder äquivalent zur ersten Seite ausgebildet, wenn nicht ausdrücklich etwas anderes gesagt wird.

Es hat sich bewährt, wenn die erste Andruckeinheit ein erstes Druckübertragungselement und ein damit drehfest verbundenes und vorzugsweise aus einem grafithaltigen Material bestehendes, erstes Pufferelement aufweist, wobei das Druckübertragungselement an der ersten Spindel drehfest aber schwenkbar gelagert oder angelenkt ist, und wobei das erste Pufferelement zwischen dem Druckübertragungselement und dem Substratrohr angeordnet ist und an der ersten Substratrohr-Stirnseite anliegt.

Das erste Druckübertragungselement ist Teil der ersten Andruckeinheit. Es ist dazu ausgelegt, die vom mindestens einen Kraftelement erzeugte axiale Anpresskraft auf die erste Substratrohr-Stirnseite zu übertragen, beziehungsweise als Widerlager für die erste Substratrohr-Stirnseite zu dienen, wenn die vom Kraftelement erzeugte axiale Anpresskraft auch oder ausschließlich auf die zweite Substratrohr-Stirnseite einwirkt. Das Druckübertragungselement wirkt unmittelbar oder mittelbar (das heißt über ein Zwischenelement) mit der ersten Spindel zusammen, an der oder auf der es drehfest aber schwenkbar gelagert oder angelenkt ist. Beispielsweise weist das Druckübertragungselement eine zentrale Öffnung mit einem umlaufenden Öffnungsrand auf, der auf der ersten Spindel aufsitzt. Das Druckübertragungselement besteht vorzugsweise aus Metall, beispielsweise aus Edelstahl.

Das Pufferelement ist zwischen dem Druckübertragungselement und der ersten Substratrohr-Stirnseite angeordnet. Es dient einerseits zur Verbesserung der Klemmwirkung und andererseits dazu, Impulse in axialer oder azimutaler Richtung abzufangen, die ansonsten auf die vergleichsweise stoßempfindliche Stirnseite einwirken würden. Das Pufferelement ist beispielsweise ringförmig oder sternförmig ausgebildet. Es hat vorzugsweise eine geringe Härte und erlaubt das Anlegen einer vergleichsweise hohen Anpresskraft ohne Beschädigung der Substratrohr-Stirnseite, und es erzeugt eine ausreichend hohe Reibung, so dass die Rotationsbewegung übertragen wird. Ein geeigneter Werkstoff ist beispielsweise Grafit, der aufgrund seiner Schmiereigenschaft einen radialen Schlupf der Rohrstirnflächen auf dem Grafit ermöglicht und somit eine radiale thermische Ausdehnung des Substratrohres zulässt, aber immer noch genug Reibungskraft besitzt, um die Impulse und Kräfte bei azimutaler Beschleunigung zu übertragen.

Der Kraftfluss der Anpresskraft ist hier: Kraftelement (beispielsweise ein federbelastetes Spannfutter) **→** erste Andruckeinheit mit erster Spindel **→** Gelenk/schwenkbewegliches Lager **→** erstes Druckübertragungselement **→** erstes Pufferelement **→** erste Substratrohr-Stirnseite.

Das erste Pufferelement kann als Stufen-Ringscheibe ausgebildet sein, die einen hohlzylinderförmigen Abschnitt mit einem nach außen ragenden Flansch aufweist, wobei der Flansch an der ersten Substratrohr-Stirnseite anliegt und der hohlzylinderförmige Abschnitt in die Substratrohr-Durchgangsbohrung hineinragt. Das stufenscheibenförmige Pufferelement untergreift dabei die Substratrohr-Innenwand mit geringem Spiel und dient gleichzeitig als Zentrierelement. Dies ist eine Möglichkeit, um die Position des ersten Zentrierelements im Bereich der ersten Substratrohr-Stirnseite zu gewährleisten, wenn dies erforderlich oder vorteilhaft erscheint. Das Zentrierelement und das Pufferelement sind bei dieser Ausführungsform einteilig ausgeführt.

Andererseits ist das Pufferelement hohen Kräften ausgesetzt und kann vergleichsweise schnell verschleißen. Außerdem ist es vorteilhaft, wenn das Zentrierelement und das Pufferelement thermisch entkoppelt werden können, beispielsweise durch einen Spalt. Als Verschleißteil ist das Pufferelement bevorzugt einfach und kostengünstig austauschbar. Im Hinblick darauf hat es sich als günstig erweisen, wenn das erste Zentrierelement mit dem ersten Pufferelement lösbar und drehfest verbunden ist.

Dies ist eine weitere Möglichkeit, um die Position des ersten Zentrierelements im Bereich der ersten Substratrohr-Stirnseite zu gewährleisten, wenn dies erforderlich oder vorteilhaft erscheint. Die lösbare Verbindung ist beispielsweise mittels Schrauben ausgeführt. Das Pufferelement kann dadurch einfach ausgetauscht werden, beispielsweise im Fall von Verschleiß. Die Drehfestigkeit wird auch durch eine lediglich lockere Verbindung zwischen Pufferelement und Zentrierelement gewährleistet, die einerseits ein mechanisches Spiel erlaubt und die andererseits einen Spalt zwischen Pufferelement und Zentrierelement zur thermischen Entkopplung frei lässt. In dem Fall sind beispielsweise Schrauben vorgesehen, die mit Spiel in Bohrungen im Pufferelement und im Zentrierelement geführt sind, so dass die gelenkige Verbindung zwischen der jeweiligen Spindel und dem Andruckeinheit nicht behindert wird. Die Schrauben bewirken einen Formschluss für die Rotationsbewegung und können insoweit als Mitnehmerelemente für die Rotationsbewegung des Substratrohres dienen. Bei einer Verfahrensweise unter Einsatz eines ersten Pufferelements hat sich auch als vorteilhaft erwiesen, wenn dieses das Druckübertragungselement und das Substratrohr in radialer Richtung überragt.

Während des OVD-Außenabscheideverfahrens trifft die Flamme des mindestens einen Abscheidebrenners auf die Mantelfläche des Substratrohres beziehungsweise auf die des sich bildenden SiO₂-Körpers und kann danach seitlich abgelenkt werden, so dass sie sich tangential zur Körper-Mantelfläche in Richtung der Endbereiche des SiO₂-Körpers ausbreitet. Infolge des radialen Überstandes des Pufferelements gegenüber dem Druckübertragungselement befindet sich letzteres im Flammenschatten, und ist dadurch vor thermischer und korrosiver Beanspruchung weitgehend geschützt, der andererseits das Pufferelement ausgesetzt ist. Die Höhe des radialen Überstandes liegt vorzugsweise im Bereich von 1cm bis 3cm.

Die Substratrohr-Halterung weist bevorzugt einen Kompensationsmechanismus zur Kompensation thermischer Ausdehnung in Richtung der Substratrohr-Längsachse auf. Der Kompensationsmechanismus und der Klemmmechanismus können gemeinsame Komponenten haben. Beispielsweise umfasst der Kompensationsmechanismus in der Regel ein Federelement, wobei bei einer bevorzugten Verfahrensweise das Kraftelement des Klemmmechanismus ebenfalls ein Federelement umfasst, das gleichzeitig Bestandteil des Kompensationsmechanismus ist. Das Federelement ist somit sowohl eine Komponente des Kompensationsmechanismus als auch eine Komponente des Klemmmechanismus der Substratrohr-Halterung. Das Federelement ist beispielsweise als einseitig oder beidseitig federgelagertes Spannfutter ausgeführt.

### Definitionen und Messmethoden

Einzelne Begriffe der obigen Beschreibung werden im Folgenden ergänzend definiert. Die Definitionen sind Bestandteil der Beschreibung der Erfindung. Für Begriffe und Messverfahren, die in der Beschreibung nicht speziell definiert sind, ist die Auslegung gemäß der Internationalen Fernmeldeunion (ITU; International Telecommunication Union) maßgeblich. Bei einem Widerspruch zwischen einer der folgenden Definitionen und der übrigen Beschreibung ist das in der übrigen Beschreibung Gesagte maßgeblich.

### Rohrförmiger SiO₂-Rohling

Ergebnis des Abscheideprozesses ist ein rohrförmiger Verbundkörper aus einem Substratrohr und einem Körper aus synthetischem Siliziumdioxid. Der Körper aus synthetischem Siliziumdioxid liegt je nach Temperatur beim Abscheideprozess entweder als poröser "Sootkörper" vor oder als Körper aus mehr oder weniger transparentem Quarzglas. Er wird hier als "SiO₂-Körper" bezeichnet. Der SiO₂-Körper ist alleiniger Bestanteil des rohrförmigen SiO₂-Rohlings, oder das Substratrohr ist weiterer Bestandteil des SiO₂-Rohlings und begrenzt gegebenenfalls dessen Innenbohrung. Ein Substratrohr aus einem anderen Material als Quarzglas ist nicht Bestandteil des SiO₂-Rohlings.

### Bauteil aus synthetischem Quarzglas

Ein Bauteil aus synthetischem Quarzglas wird durch mechanische, thermische oder chemische Weiterbearbeitung eines rohrförmigen "SiO₂-Rohlings erhalten. Die mechanische Weiterbearbeitung umfasst Sägen, Schneiden, Fräsen, Schleifen und Polieren der Innen- und Außenkonturen. Die thermische Weiterbearbeitung umfasst thermisches Trocknen, Sintern, Verglasen, Schmelzen, Umformen und Tempern. Die chemische Weiterbearbeitung umfasst chemisches bzw. thermisches oder Vakuum-Trocknen (Dehydratationsbehandlung), Dotieren und Ätzen. Das Bauteil ist ein einsatzbereites Quarzglasprodukt oder ein Halbzeug dafür, beispielsweise ein Quarzglasrohr oder ein Quarzglasring.

### Quarzglas / synthetisches Quarzglas / synthetisches Siliziumdioxid

Unter Quarzglas und synthetischem Siliziumdioxid wird hier Glas mit einem SiO₂-Anteil von mindestens 87 Gew-% verstanden. Es ist und dotiert (SiO₂-Gehalt = 100%) oder es enthält Dotierstoffe, wie beispielsweise Fluor, Chlor, Stickstoff, Kohlenstoff oder Oxide von Bor, Germanium, Seltenerdmetallen, Aluminium oder Titan.

Quarzglas ist beispielsweise aus natürlich vorkommendem SiO₂-Rohstoff erschmolzen (natürliches Quarzglas), oder es ist synthetisch erzeugt (synthetisches Quarzglas) oder es besteht aus Mischungen dieser Quarzglassorten. Synthetisches, transparentes Quarzglas wird beispielsweise durch Flammenhydrolyse oder Oxidation synthetisch erzeugter Siliziumverbindungen, durch Polykondensation organischer Siliziumverbindungen nach dem so genannten Sol-Gel-Verfahren oder durch Hydrolyse und Fällung anorganischer Siliziumverbindungen in einer Flüssigkeit erhalten.

### Sintern / Verglasen

Mit "Sintern" oder "Verglasen" wird hier ein Verfahrensschritt bezeichnet, bei dem ein SiO₂-Körper aus porösem Siliziumdioxid in einem Ofen bei hoher Temperatur behandelt wird. Das Sintern/Verglasen erfolgt Inertgas, einer Wasserstoff und/oder Helium enthaltenden Atmosphäre oder unter Vakuum. Unter Vakuum wird ein absoluter Gasdruck von weniger als 2 mbar verstanden. Ergebnis des Verglasens/Sinterns ist ein "rohrförmiger Rohling aus synthetischem Siliziumdioxid".

### Substratrohr-Außendurchmesser / Substratrohr-Innendurchmesser

Der Substratrohr-Querschnitt hat eine kreisrunde Außenkontur oder eine von der Rundform abweichende Außenkontur. Bei einer von der Rundform abweichenden Außenkontur ergibt sich der lokale "Außendurchmesserwert" aus dem Durchmesser des (kleinsten) Umkreises.

Der Substratrohr-Querschnitt hat eine kreisrunde Innenkontur oder eine von der Rundform abweichende Innenkontur. Bei einer von der Rundform abweichenden Innenkontur ergibt sich der lokale "Innendurchmesserwert" aus dem Durchmesser des (größten) Inkreises.

Im Substratrohr-Längsschnitt sind die lokalen Werte für den Außendurchmesser über die Gesamtlänge des Substratrohres konstant oder sie sind nicht konstant. Bei konstanten Außendurchmesser-Werten hat das Substratrohr von außen gesehen Zylinderform. Die nicht-konstanten Außendurchmesser-Werte können über die Gesamtlänge oder über eine Teillänge variieren. Die Außenkontur kann sich beispielsweise kontinuierlich oder stufenweise verändern. Der Außendurchmesser ergibt sich in dem Fall aus den über die Gesamtlänge gemittelten lokalen Außendurchmesser-Werten.

Im Substratrohr-Längsschnitt sind die lokalen Werte für den Innendurchmesser über die Gesamtlänge des Substratrohres konstant oder sie sind nicht konstant. Bei konstanten Innendurchmesser-Werten ist die Durchgangsöffnung des Substratrohres zylindrisch. Die nicht-konstanten Innendurchmesser-Werte können über die Gesamtlänge oder über eine Teillänge variieren. Die Innenkontur kann sich beispielsweise kontinuierlich oder stufenweise verändern. Der Innendurchmesser ergibt sich in dem Fall aus den über die Gesamtlänge gemittelten lokalen Innendurchmesser-Werten.

### Spielpassung

Die Ermittlung der Spielpassung erfolgt beispielsweise auf Basis der Toleranztabelle nach DIN EN ISO 286 -Teil 2. Um eine gewisse axiale Beweglichkeit zwischen der jeweiligen Bohrung und der Spindel zu gewährleisten, sind die Toleranzfelder so aufeinander abzustimmen, dass das Höchstmaß der Spindel stets kleiner ist als das Mindestmaß der Bohrung. Geeignete Toleranzfelder der Bohrung sind beispielsweise H, G, F und E, und die der Spindel sind beispielsweise g, f und e.

### Ausführungsbeispiel

Nachfolgend wird die Erfindung anhand eines Ausführungsbeispiels und einer Zeichnung näher erläutert. Im Einzelnen zeigt in schematischer Darstellung
- **Figur 1**: eine Vorrichtung zur Herstellung eines rohrförmigen SiO₂-Rohlings in einer ersten Ausführungsform einer Substratrohrhalterung in einem Längsschnitt,
- **Figur 2**: eine Vorrichtung zur Herstellung eines rohrförmigen SiO₂-Rohlings aus synthetischem Siliziumdioxid in einer zweiten Ausführungsform einer Substratrohrhalterung in einem Längsschnitt, teilweise als Ausschnitt, und
- **Figur 3**: einen Ausschnitt der Substratrohrhalterung von Figur 2 in vergrößerter Darstellung.

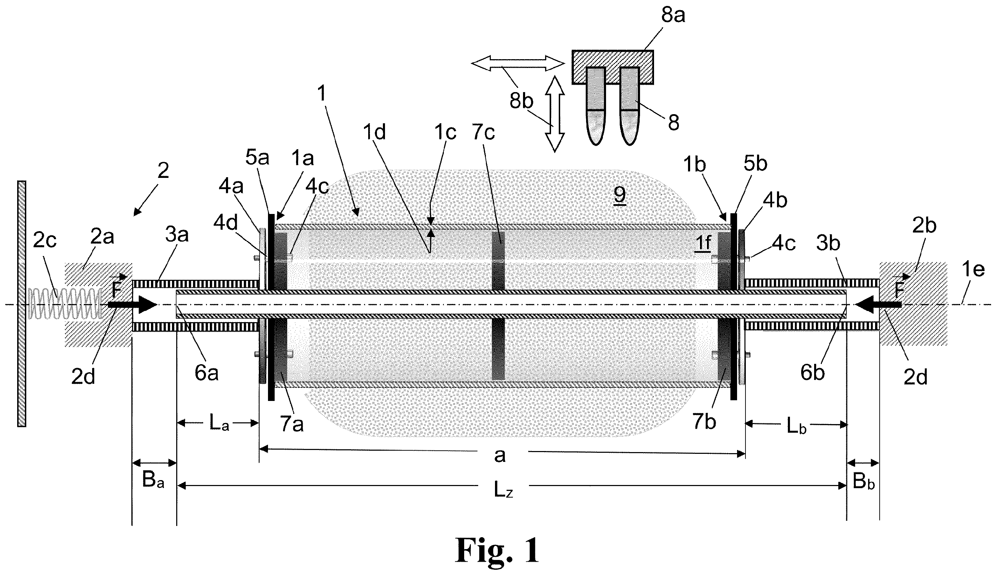

Die in **Figur 1** schematisch dargestellte Vorrichtung umfasst eine Glasdrehbank 2 zur Halterung und Rotation eines Substratrohres 1 aus SiSiC. Das Substratrohr 1 hat eine linke Stirnseite 1a, eine rechte Stirnseite 1b, eine Außenmantelfläche 1c, eine Innenmantelfläche 1d, eine horizontal orientierte Längsachse 1e und eine zylindrische Durchgangsbohrung 1f. Das Substratrohr 1 hat eine Länge von 2m, einen Außendurchmesser von 280mm und eine Wandstärke von 20mm. Der Innendurchmesser beträgt somit 240mm.

Die Glasdrehbank 2 ist angedeutet durch zwei sich gegenüberliegende Spannfutter 2a, 2b, von denen das Spannfutter 2a federgelagert ist, wie dies die Druckfeder 2c anzeigt. Mittels der Druckfeder 2c wird eine Druckkraft F erzeugt, die die beiden Spannfutter 2a, 2b gegeneinanderdrückt, wie von den Richtungspfeilen 2d angedeutet.

In den Spannfuttern 2a, 2b ist mit ihrem proximalen Ende jeweils eine Hohlspindel 3a, 3b aus Edelstahl eingespannt. Die Rotationsachsen der Hohlspindeln 3a, 3b verlaufen im Idealfall koaxial zur Substratrohr-Längsachse 1e. Die Hohlspindeln 3a, 3b haben einen Außendurchmesser von 90mm und einen Innendurchmesser von 82mm.

Die distalen Enden der Hohlspindeln 3a, 3b sind schwenkbeweglich mit jeweils einer ringförmigen Druckplatte 4a, 4b aus Edelstahl verbunden. Zu diesem Zweck verjüngen sich die distalen Enden der Hohlspindeln 3a, 3b konisch und drücken infolge der Kraft der Feder 2c gegen die jeweilige Druckplatte 4a, 4b. Dabei ragt das konische Ende jeweils in die Mittenbohrung der jeweiligen ringförmigen Druckplatte 4a, 4b hinein und liegt am Innenrand der Mittenbohrung an.

Die Druckplatten 4a, 4b liegen jeweils an Pufferscheiben 5a, 5b aus Grafit an, und diese wiederum an den Substratrohr-Stirnseiten 1a beziehungsweise 1b. Die Pufferscheiben 5a, 5b haben eine Mittenbohrung, deren Durchmesser denen der Druckplatten entspricht und die koaxial zu diesen verlaufen. Die Druckplatten 4a, 4b haben einen Außendurchmesser, der um 10mm kleiner ist als der Außendurchmesser des Substratrohres. Die Pufferscheiben 5a, 5b haben einen Außendurchmesser, der den Außendurchmesser des Substratrohres 1 um 40mm überragt.

Durch die Substratrohr-Durchgangsbohrung 1f sowie durch die Mittenbohrungen von Druckplatten 4a, 4b und Pufferscheiben 5a, 5b erstreckt sich ein rohrförmiger Zentrierträger 6 aus SiSiC mit einer Gesamtlänge L_{z} und mit einem Außendurchmesser von 80 mm. Ein Ende 6a des Zentrierträgers 6 ragt über eine Länge Lₐ von mindestens 500mm in die Hohlspindel 3a hinein und endet innerhalb dieser unter Belassung eines variablen Bewegungsspielraums Bₐ von etwa 6mm. Das andere Ende 6b ragt über eine Länge L_{b} von 600mm in die Hohlspindel 3b hinein und endet innerhalb dieser unter Belassung eines variablen Bewegungsspielraums B_{b} von ebenfalls etwa 6mm. Der gesamte Bewegungsspielraum B₀=Bₐ+B_{b} für den Zentrierträger 6 innerhalb der Hohlspindeln 3a, 3b ist somit 12mm. Der Außendurchmesser des Zentrierträgers 6ist über seine Länge konstant und mit Spielpassung an den Innendurchmesser der Hohlspindeln 3a, 3b angepasst und darin teleskopartig verschiebbar.

Auf den Zentrierträger 6 sind drei Zentrierringe 7a, 7b, 7c aus Grafit aufgesetzt. Der Zentrierring 7a befindet sich im Bereich der linken Substratrohr-Stirnseite 1a, der Zentrierring 7b befindet sich im Bereich der rechten Substratrohr-Stirnseite 1b, und der Zentrierring 7c befindet sich etwa in der Mitte der Substratrohr-Durchgangsbohrung 1f. Alle Zentrierringe 7a, 7b, 7c haben einen Außendurchmesser, der mit Spielpassung an den Substratrohr-Innendurchmesser angepasst ist, und sie haben einen Innendurchmesser der mit Spielpassung an den Zentrierträger-Außendurchmesser angepasst ist.

Der endständige Zentrierring 7a, die Pufferscheibe 5a und die Druckscheibe 4a sind mittels Schrauben 4c locker miteinander verbunden. Die Schrauben 4c haben ein Gewinde, das an einen Zylinderabschnitt 4d angrenzt. Das Schrauben-Gewinde greifen jeweils in ein Innengewinde in der Druckscheibe 4a ein, so dass der Zylinderabschnitt 4d im angezogenen Zustand an der Druckscheibe 4a fest anliegt. Die Länge des Zylinderabschnitts 4d ist größer als die Gesamtdicke des Komponentenstapels aus Zentrierring 7a und Pufferscheibe 5a, so dass die Köpfe der Schrauben 4c nicht am Zentrierring 7a anliegen, sondern ein Spalt zwischen dem Zentrierring 7a und den Schraubenköpfen verbleibt. Außerdem sind die Durchgangsbohrungen für den Durchlass des Zylinderabschnitts 4d in der Pufferscheibe 5a und im Zentrierring 7a größer als der Durchmesser des Zylinderabschnitts 4d, so dass die Schrauben 4c auch leicht schräg in den Durchgangsbohrungen stehen können und so die möglichen Schwenkbewegungen des Gelenks nicht behindern. Diese lockere Verbindung ist daher geeignet, sowohl thermisch bedingte Längenänderungen zwischen Komponenten der Substratrohrhalterung zuzulassen als auch Abweichungen in Soll-Abmessungen, - Positionierungen und -Ausrichtungen der Komponenten zu kompensieren. Außerdem bewirken die Schrauben 4c eine gewisse Verdrehfestigkeit zwischen der Pufferscheibe 5a und der Druckscheibe 4a bei der Rotationsbewegung des Substratrohres 1 und dienen insoweit als Mitnehmerelemente für diese Rotationsbewegung. Das Gleiche gilt für die Verbindung des Zentrierrings 7b, der Pufferscheibe 5b und der Druckscheibe 4b.Zwischen dem Zentrierring 7a, 7b und der Pufferscheibe 5a, 5b ist zwecks thermischer Entkopplung ein Spalt vorgesehen (in der Figur nicht erkennbar).

Mehrere Abscheidebrenner 8 zur Erzeugung von SiO₂-Partikeln sind auf einem gemeinsamen Schlitten 8a montiert, mittels dem sie entlang der Außenmantelfläche 1c des Substratrohres 1 beziehungsweise entlang eines sich ausbildenden SiO₂-Sootkörpers 9 reversierend und transversal bewegbar und senkrecht dazu verschiebbar sind, wie dies die Richtungspfeile 8b andeuten.

Nachfolgend wird ein Ausführungsbeispiel zur Herstellung eines Bauteils aus Quarzglas anhand Figur 1 erläutert.

Den Abscheidebrennern 8 werden jeweils als Brennergase Sauerstoff und Wasserstoff zugeführt sowie als Einsatzmaterial für die Bildung von SiO₂-Partikeln ein Gasstrom, der SiCl₄ oder ein anderes siliziumhaltiges Ausgangsmaterial enthält. Diese Komponenten werden in der jeweiligen Brennerflamme zu SiO₂-Partikeln umgesetzt und diese SiO₂-Partikel werden auf dem um die Längsachse 1e rotierenden Substratrohr 1 unter Bildung des Sootkörpers 9 aus porösem SiO₂-Soot abgeschieden.

Zur Rotation des Substratrohres 1 überträgt die Glasdrehbank 2 ein Drehmoment auf die Hohlspindeln 2a, 2b. Gleichzeitig wird mittels der Druckfeder 2c eine in axialer Richtung wirkende Druckkraft F erzeugt, die die beiden Hohlspindeln 3a, 3b gegeneinander presst und die je nach der Auslenkung der Feder aus der Feder-Ruhelänge im Bereich zwischen 0,5k kN und 10 kN liegt. Die anfänglich eingestellte Druckkraft F von beispielsweise 1kN liegt an den Druckplatten 4a, 4b, an den Pufferscheiben 5a, 5b und damit auch an den Substratrohr-Stirnseiten 1a, 1b an. Diese Druckkraft F erzeugt zwischen den Pufferscheiben 5a, 5b einen Reibschluss, der genügt um das Eigengewicht des Substratrohres 1 und das Gewicht des Sootkörpers 9 zu halten. Die Zentrierringe 7a, 7b, 7c dienen lediglich zur Absicherung gegen ein unvorhergesehenes Abrutschen oder Durchbiegen des Substratrohres 1. Eine gewisse axiale Führung ergibt sich durch das Zusammenspiel von Hohlspindeln 3a, 3b und Zentrierträger 6, das aufgrund des vorhandenen mechanischen Spiels etwaige Radialversätze und Winkeldifferenzen zwischen den Rotationsachsen der Hohlspindeln 3a, 3b kompensiert und mechanische Spannungen vermeidet.

Der Abscheideprozess wird beendet, sobald der Sootkörper 9 einen vorgegebenen Außendurchmesser erreicht hat, der in Abhängigkeit von der Dichte der Sootschicht zu dem vorgegebenen Außendurchmesser des hohlzylindrischen Quarzglas-Rohlings führt, zuzüglich einem vorgegebenen Aufmaß von beispielsweise 1mm.

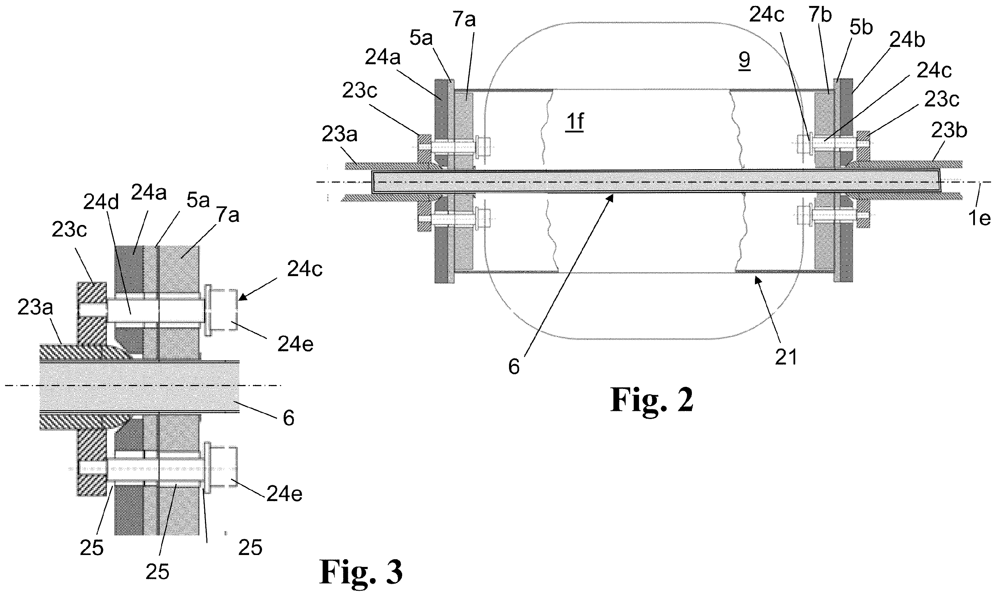

Das Substratrohr 1 wird entfernt und der Sootkörper 9 wird einer Dehydratationsbehandlung unterzogen. Das anschließende Verglasen des Sootkörpers erfolgt in einem Zonensinterofen unter Vakuum oder in einer Atmosphäre aus Gasen, die in Quarzglas schnell diffundieren, wie beispielsweise Helium und Wasserstoff und somit keine Blasen verursachen. Das so erhaltene Quarzglasrohr hat eine Länge von 1750mm, einen Innendurchmesser von 280mm und eine Wandstärke von 45mm. Sofern in Figur 2 und in Figur 3 die gleichen Bezugsziffern wie in Figur 1 verwendet sind, so bezeichnen diese identische oder äquivalente Bauteile oder Bestandteile der Vorrichtung.

Die in **Figur 2** schematisch dargestellte Vorrichtung unterscheidet sich von der von Figur 1 im Wesentlichen in der Art und Weise der Substratrohrhalterung und dem Substratrohr 21, das hier aus Quarzglas besteht. Das Substratrohr 21 hat eine Länge von 1,5m, einen Außendurchmesser von 280mm und eine Wandstärke von 5mm. Der Innendurchmesser beträgt somit 270mm.

Die jeweils in Spannfuttern mit ihrem proximalen Ende eingespannten Hohlspindeln 23a, 23b bestehen aus Edelstahl. Die Rotationsachsen der Hohlspindeln 23a, 23b verlaufen im Idealfall koaxial zur Substratrohr-Längsachse 1e. Die Hohlspindeln 23a, 23b haben einen Außendurchmesser von 100mm. Im Bereich der distalen Enden der Hohlspindeln 23a, 23b ist jeweils ein umlaufender Ausleger 2c angeschweißt.

Die schwenkbewegliche Verbindung zwischen den Hohlspindeln 23a, 23b und den jeweiligen Druckplatten 24a, 24 ist hier als Loslager ausgebildet und umfasst vorzugsweise einen kardanischen Kugel-Kegelsitz. Dabei bilden die distalen Enden der Hohlspindeln 23a, 23b jeweils einen konvex gekrümmten Sitz, der einen Kugel- oder Radienabschnitt aufweist, auf dem die Druckplatte 24a beziehungsweise die Druckplatte 24b beweglich gelagert ist, indem sie einen mit dem konvex gekrümmten Sitz zusammenwirkenden konkav gekrümmten Kugel- oder Radienabschnitt aufweist.

**Figur 3** zeigt die schwenkbewegliche Verbindung zwischen den Hohlspindeln 23a, 23b und den jeweiligen Druckplatten 24a, 24b in einer vergrößerten Darstellung. Der endständige Zentrierring 7a, die Pufferscheibe 5a und die Druckscheibe 24a bilden einen Komponentenstapel, der mittels Gewindeschrauben 24c, die jeweils in ein Gewinde im Ausleger 23c eingreifen, lose miteinander verbunden sind. Der Zylinderabschnitt 24d hat dabei eine Länge, die größer ist als die Gesamtdicke des Komponentenstapels aus Zentrierring 7a, Pufferscheibe 5a und Druckscheibe 24a. Außerdem ist die Weite der Bohrung zur Aufnahme der Gewindeschrauben 24c im Komponentenstapel deutlich größer als der Durchmesser des Zylinderabschnitts 24d. Dies führt dazu, dass auch bei fest angezogener Gewindeschraube 24c sowohl zwischen dem Schraubenkopf 24e und dem Zentrierring 7a, als auch zwischen der Druckplatte 24 und dem Ausleger 23c, als auch entlang des Zylinderabschnitt 24d mehrere Spalte 25 verbleiben. Die Spalte 25 stellen sicher, dass die Verbindung zwischen den Hohlspindeln 23a, 23b und den jeweiligen Druckplatten 24a, 24b schwenkbeweglich bleibt. Gleichzeitig dienen die Schrauben 24c als Mitnehmerelemente für die Rotationsbewegung des Substratrohres 1.

## Patentansprüche

1. Vorrichtung zur Herstellung eines rohrförmigen SiO₂-Rohlings in einem Außenabscheideverfahren, aufweisend:
• ein Substratrohr (1), das eine Substratrohr-Längsachse (1e), eine Substratrohr-Länge, eine erste Substratrohr-Stirnseite (1a), eine zweite Substratrohr-Stirnseite (1b), eine Substratrohr-Außenmantelfläche (1c), eine Substratrohr-Innenmantelfläche (1d), einen Substratrohr-Außendurchmesser, einen Substratrohr-Innendurchmesser, eine Substratrohr-Wandstärke und eine durchgehende und koaxial zur Substratrohr-Längsachse verlaufende Durchgangsöffnung (1f) aufweist,
• und eine Substratrohr-Halterung, die eine Einspannvorrichtung umfasst, und die ausgelegt ist, das Substratrohr (1) zu lagern und das Substratrohr (1) um eine koaxial oder parallel zur Substratrohr-Längsachse (1e) verlaufende Rotationsachse zu rotieren,
**dadurch gekennzeichnet, dass** die Substratrohr-Halterung einen Klemmmechanismus umfasst, der eine an der ersten Substratrohr-Stirnseite (1a) anliegende erste Andruckeinheit, eine an der zweiten Substratrohr-Stirnseite (1b) anliegende zweite Andruckeinheit und mindestens ein Kraftelement aufweist, das zur Erzeugung einer axialen Anpresskraft mit einer in Richtung der Substratrohr-Längsachse (1e) wirkenden Kraftkomponente ausgelegt ist, die ein Einklemmen des Substratrohrs (1) zwischen der ersten Andruckeinheit und der zweiten Andruckeinheit bewirkt.

2. Vorrichtung nach Anspruch 1, **dadurch gekennzeichnet, dass** die Einspannvorrichtung eine um die Rotationsachse rotierbare erste Spindel (3a) und eine der ersten Spindel (3a) in Richtung der Substratrohr-Längsachse (1e) axial gegenüberliegende und um die Rotationsachse rotierbare zweite Spindel (3b) umfasst, wobei die erste Spindel (3a) an der ersten Andruckeinheit drehfest aber schwenkbar gelagert oder angelenkt ist und auf diese die axiale Anpresskraft überträgt, und wobei die zweite Spindel (3b) an der zweiten Andruckeinheit drehfest aber gegeneinander beweglich gelagert oder angelenkt ist und auf diese die axiale Anpresskraft überträgt.

3. Vorrichtung nach Anspruch 2, **dadurch gekennzeichnet, dass** die erste Spindel (3a) ein freies, distales Ende aufweist, auf dem die erste Andruckeinheit schwenkbeweglich gelagert ist, und dass die zweite Spindel (3b) ein freies distales Ende aufweist, auf dem die zweite Andruckeinheit schwenkbeweglich gelagert ist, wobei bevorzugt das schwenkbewegliche Lager als Kugel-, Kegel-, Rollen- oder Gleitlager ausgebildet ist, und vorzugsweise einen kardanischen Kugel-Kegelsitz umfasst.

4. Vorrichtung nach einem oder mehreren der Ansprüche 2 oder 3, **dadurch gekennzeichnet, dass** die Substratrohr-Halterung eine Zentriereinheit aufweist, die mindestens einen rohr- oder stabförmigen Zentrierträger (6) umfasst, der sich durch die Durchgangsöffnung (1f) des Substratrohres (1) und zwischen der ersten Andruckeinheit und der zweiten Andruckeinheit erstreckt.

5. Vorrichtung nach Anspruch 4, **dadurch gekennzeichnet, dass** die erste Spindel (3a) als Hohlspindel mit einer ersten Innenbohrung ausgebildet ist, und dass die zweite Spindel (3b) als Hohlspindel mit einer zweiten Innenbohrung ausgebildet ist, und dass der Zentrierträger (6) mit einem ersten Ende (6a) in die erste Innenbohrung und mit einem zweiten Ende (6b) in die zweite Innenbohrung hineinragt.

6. Vorrichtung nach Anspruch 5, **dadurch gekennzeichnet, dass** die Zentriereinheit Zentrierelemente umfasst, die innerhalb der Substratrohr-Durchgangsbohrung (1f) auf den Zentrierträger (6) aufgesetzt sind, und von denen ein erstes Zentrierelement im Bereich der ersten Substratrohr-Stirnseite (1a), und ein zweites Zentrierelement im Bereich der zweiten Substratrohr-Stirnseite (1b) angeordnet ist.

7. Vorrichtung nach einem oder mehreren der Ansprüche 2 bis 6, **dadurch gekennzeichnet, dass** die erste Andruckeinheit ein erstes Druckübertragungselement (4a) und ein damit drehfest verbundenes und vorzugsweise aus einem grafithaltigen Material bestehendes, erstes Pufferelement (5a) aufweist, wobei das Druckübertragungselement (4a) an der ersten Spindel (3a) drehfest aber schwenkbar gelagert oder angelenkt ist, und wobei das erste Pufferelement (5a) zwischen dem Druckübertragungselement (4a) und dem Substratrohr (1) angeordnet ist und an der ersten Substratrohr-Stirnseite (1a) anliegt.

8. Vorrichtung nach Anspruch 7, **dadurch gekennzeichnet, dass** das erste Pufferelement (5a) das Druckübertragungselement (4a) und das Substratrohr (1) in radialer Richtung überragt.

9. Vorrichtung nach einem oder mehreren der Ansprüche 1 bis 8, **dadurch gekennzeichnet, dass** die erste Andruckeinheit ein an der ersten Substratrohr-Stirnseite (1a) anliegende Andruckfläche umfasst, die aus einem grafithaltigen Material besteht.

10. Vorrichtung nach einem oder mehreren der vorhergehenden Ansprüche, **dadurch gekennzeichnet, dass** das Substratrohr (1) eine Wandstärke aufweist, die weniger als 20% des Substratrohr-Außendurchmessers beträgt.

11. Vorrichtung nach einem oder mehreren der vorhergehenden Ansprüche, **dadurch gekennzeichnet, dass** die Substratrohr-Halterung einen Kompensationsmechanismus zur Kompensation thermischer Ausdehnung in Richtung der Substratrohr-Längsachse (1e) umfasst, und dass das Kraftelement des Klemmmechanismus bevorzugt ein Federelement (2c) und gleichzeitig Bestandteil des Kompensationsmechanismus ist.

12. Vorrichtung nach einem der vorhergehenden Ansprüche 2 bis 11, **dadurch gekennzeichnet, dass** im Bereich des distalen Endes der ersten Spindel (3a) und/oder der zweiten Spindel (3b) mindestens ein Stützelement angeordnet ist, auf dem die jeweilige Spindel abrollen kann.

13. Verfahren zur Herstellung eines rohrförmigen SiO₂-Rohlings in einem Außenabscheideverfahren mit folgenden Verfahrensschritten:
(a) Bereitstellen eines Substratrohres (1), das eine Substratrohr-Längsachse (1e), eine Substratrohr-Länge, eine erste Substratrohr-Stirnseite (1a), eine zweite Substratrohr-Stirnseite (1b), eine Substratrohr-Außenmantelfläche (1c), eine Substratrohr-Innenmantelfläche (1d), einen Substratrohr-Außendurchmesser und eine durchgehende und koaxial zur Substratrohr-Längsachse (1e) verlaufende Durchgangsöffnung (1f) aufweist,
(b) Lagern des Substratrohres (1) in einer Substratrohr-Halterung, die eine Einspannvorrichtung umfasst,
(c) Rotieren des Substratrohres (1) um eine koaxial oder parallel zur Substratrohr-Längsachse (1e) verlaufende Rotationsachse,
(d) Abscheiden von SiO₂-Partikeln auf der Außenmantelfläche (1c) des Substratrohres (1) mittels mindestens einem Abscheidebrenner (8) unter Bildung des rohrförmigen SiO₂-Rohlings,
**dadurch gekennzeichnet, dass** mittels der Substratrohr-Halterung auf die erste Stirnseite (1a) und auf die zweite Stirnseite (1b) eine axiale Anpresskraft mit einer in Richtung der Substratrohr-Längsachse (1e) wirkenden Kraftkomponente erzeugt wird, die ein Einklemmen des Substratrohrs (1) zwischen einer an der ersten Stirnseite (1a) anliegenden ersten Andruckeinheit und einer an der zweiten Stirnseite (1b) anliegenden zweiten Andruckeinheit bewirkt.

14. Verfahren nach Anspruch 13, **dadurch gekennzeichnet, dass** zum Lagern des Substratrohres (1) gemäß Verfahrensschritt (b) eine Substratrohr-Halterung einer Vorrichtung gemäß einem der Ansprüche 1 bis 12 eingesetzt wird.

15. Verfahren nach Anspruch 13 oder 14, **dadurch gekennzeichnet, dass** ein Substratrohr (1) eingesetzt wird, das aus SiC, SiSiC, Al₂O₃ oder einem anderen keramischen Werkstoff oder aus Grafit besteht, und das einen Außendurchmesser von mindestens 250mm aufweist, oder dass ein Substratrohr (21) eingesetzt wird, das aus Quarzglas besteht, und das einen Innendurchmesser von mindestens 250mm aufweist.

## Claims

1. A device for producing a tubular SiO₂ blank in an external deposition process, comprising:
• a substrate tube (1) which comprises a substrate tube longitudinal axis (1e), a substrate tube length, a first substrate tube end face (1a), a second substrate tube end face (1b), a substrate tube outer lateral surface (1c), a substrate tube inner lateral surface (1d), a substrate tube outer diameter, a substrate tube inner diameter, a substrate tube wall thickness, and a continuous through-opening (1f) running coaxially with the substrate tube longitudinal axis,
• and a substrate tube holder which comprises a clamping device and which is designed to support the substrate tube (1) and to rotate the substrate tube (1) about an axis of rotation running coaxially with or parallel to the substrate tube longitudinal axis (1e),
**characterized in that** the substrate tube holder comprises a clamping mechanism which comprises a first pressure unit abutting the first substrate tube end face (1a), a second pressure unit abutting the second substrate tube end face (1b), and at least one force element which is designed to generate an axial contact pressure with a force component acting in the direction of the substrate tube longitudinal axis (1e), which force component causes the substrate tube (1) to be clamped between the first pressure unit and the second pressure unit.

2. The device according to claim 1, **characterized in that** the clamping device comprises a first spindle (3a), which can rotate about the axis of rotation, and a second spindle (3b), which is situated axially opposite the first spindle (3a) in the direction of the substrate tube longitudinal axis (1e) and can rotate about the axis of rotation, the first spindle (3a) being rotationally fixedly but pivotably mounted on or linked to the first pressure unit and transmitting the axial contact pressure to this first pressure unit, and the second spindle (3b) being mounted on or linked to the second pressure unit so as to be rotationally fixed but movable relative thereto and transmitting the axial contact pressure to this second pressure unit.

3. The device according to claim 2, **characterized in that** the first spindle (3a) comprises a free, distal end on which the first pressure unit is pivotably mounted, **and in that** the second spindle (3b) comprises a free distal end on which the second pressure unit is pivotably mounted, the pivotable bearing being preferably designed as a ball bearing, conical bearing, roller bearing or plain bearing, and preferably comprising a cardan ball and cone seat.

4. The device according to one or more of claims 2 or 3, **characterized in that** the substrate tube holder comprises a centering unit comprising at least one tubular or rod-shaped centering support (6) extending through the through-opening (1f) of the substrate tube (1) and between the first pressure unit and the second pressure unit.

5. The device according to claim 4, **characterized in that** the first spindle (3a) is designed as a hollow spindle comprising a first inner bore, **and in that** the second spindle (3b) is designed as a hollow spindle comprising a second inner bore, **and in that** the centering support (6) projects with a first end (6a) into the first inner bore and with a second end (6b) into the second inner bore.

6. The device according to claim 5, **characterized in that** the centering unit comprises centering elements which are placed on the centering support (6) inside the substrate tube through-hole (1f), and of which centering elements a first centering element is arranged in the region of the first substrate tube end face (1a), and a second centering element is arranged in the region of the second substrate tube end face (1b).

7. The device according to one or more of claims 2 to 6, **characterized in that** the first pressure unit comprises a first pressure transmission element (4a) and a first buffer element (5a) rotationally fixedly connected thereto and preferably consisting of a graphite-containing material, the pressure transmission element (4a) being rotationally fixedly but pivotably mounted on or linked to the first spindle (3a), and the first buffer element (5a) being arranged between the pressure transmission element (4a) and the substrate tube (1) and abutting the first substrate tube end face (1a).

8. The device according to claim 7, **characterized in that** the first buffer element (5a) projects beyond the pressure transmission element (4a) and the substrate tube (1) in the radial direction.

9. The device according to one or more of claims 1 to 8, **characterized in that** the first pressure unit comprises a pressure surface which abuts the first substrate tube end face (1a) and consists of a graphite-containing material.

10. The device according to one or more of the preceding claims, **characterized in that** the substrate tube (1) has a wall thickness which is less than 20% of the outer diameter of the substrate tube.

11. The device according to one or more of the preceding claims, **characterized in that** the substrate tube holder comprises a compensation mechanism for compensating for thermal expansion in the direction of the substrate tube longitudinal axis (1e), **and in that** the force element of the clamping mechanism is preferably a spring element (2c) and at the same time a component of the compensation mechanism.

12. The device according to one of the preceding claims 2 to 11, **characterized in that** at least one support element, on which the corresponding spindle can roll, is arranged in the region of the distal end of the first spindle (3a) and/or the second spindle (3b).

13. A method for producing a tubular SiO₂ blank in an external deposition process, comprising the following method steps:
(a) providing a substrate tube (1) which comprises a substrate tube longitudinal axis (1e), a substrate tube length, a first substrate tube end face (1a), a second substrate tube end face (1b), a substrate tube outer lateral surface (1c), a substrate tube inner lateral surface (1d), a substrate tube outer diameter, and a continuous through-opening (1f) running coaxially with the substrate tube longitudinal axis (1e),
(b) supporting the substrate tube (1) in a substrate tube holder comprising a clamping device,
(c) rotating the substrate tube (1) about an axis of rotation running coaxially with or parallel to the substrate tube longitudinal axis (1e),
(d) depositing SiO₂ particles on the outer lateral surface (1c) of the substrate tube (1) by means of at least one deposition burner (8), thereby forming the tubular SiO₂ blank,
**characterized in that** the substrate tube holder is used to generate, on the first end face (1a) and on the second end face (1b), an axial contact pressure with a force component acting in the direction of the substrate tube longitudinal axis (1e), which force component causes the substrate tube (1) to be clamped between a first pressure unit abutting the first end face (1a) and a second pressure unit abutting the second end face (1b).

14. The method according to claim 13, **characterized in that** a substrate tube holder of a device according to one of claims 1 to 12 is used to support the substrate tube (1) according to method step (b).

15. The method according to claim 13 or 14, **characterized in that** a substrate tube (1) is used which consists of SiC, SiSiC, Al₂O₃, or another ceramic material, or of graphite, and which has an outer diameter of at least 250 mm, **or in that** a substrate tube (21) is used which consists of quartz glass and which has an inner diameter of at least 250 mm.

## Revendications

1. Dispositif pour la fabrication d'une ébauche de SiO₂ tubulaire dans un procédé de dépôt extérieur, présentant :
• un tube de substrat (1) qui présente un axe longitudinal de tube de substrat (1e), une longueur de tube de substrat, une première face frontale de tube de substrat (1a), une seconde face frontale de tube de substrat (1b), une surface d'enveloppe extérieure de tube de substrat (1c), une surface d'enveloppe intérieure de tube de substrat (1d), un diamètre extérieur de tube de substrat, un diamètre intérieur de tube de substrat, une épaisseur de paroi de tube de substrat et une ouverture de passage (1f) continue et s'étendant coaxialement à l'axe longitudinal de tube de substrat,
• et un moyen de maintien de tube de substrat qui comprend un dispositif de serrage et qui est conçu pour soutenir le tube de substrat (1) et pour faire tourner le tube de substrat (1) autour d'un axe de rotation s'étendant coaxialement ou parallèlement à l'axe longitudinal de tube de substrat (1e),
**caractérisé en ce que** le moyen de maintien de tube de substrat comprend un mécanisme de pincement qui présente une première unité de pression s'appuyant contre la première face frontale de tube de substrat (1a), une seconde unité de pression s'appuyant contre la seconde face frontale de tube de substrat (1b) et au moins un élément de force qui est conçu pour générer une force de pression axiale avec une composante de force agissant dans la direction de l'axe longitudinal de tube de substrat (1e), laquelle composante de force provoque un pincement du tube de substrat (1) entre la première unité de pression et la seconde unité de pression.

2. Dispositif selon la revendication 1, **caractérisé en ce que** le dispositif de serrage comprend une première broche (3a) pouvant tourner autour de l'axe de rotation et une seconde broche (3b) opposée axialement à la première broche (3a) dans la direction de l'axe longitudinal de tube de substrat (1e) et pouvant tourner autour de l'axe de rotation, dans lequel la première broche (3a) est montée ou articulée sur la première unité de pression de manière fixe en rotation mais pivotante et transmet à celle-ci la force de pression axiale, et dans lequel la seconde broche (3b) est montée ou articulée sur la seconde unité de pression de manière fixe en rotation mais mobile l'une par rapport à l'autre et transmet à celle-ci la force de pression axiale.

3. Dispositif selon la revendication 2, **caractérisé en ce que** la première broche (3a) présente une extrémité distale libre sur laquelle la première unité de pression est montée de manière mobile en pivotement, **et en ce que** la seconde broche (3b) présente une extrémité distale libre sur laquelle la seconde unité de pression est montée de manière mobile en pivotement, dans lequel de préférence le palier mobile en pivotement est réalisée sous forme de roulement à billes, palier conique, palier à rouleaux ou palier lisse, et comprend de préférence une embase conique à billes à la Cardan.

4. Dispositif selon l'une ou plusieurs des revendications 2 ou 3, **caractérisé en ce que** le moyen de maintien de tube de substrat présente une unité de centrage qui comprend au moins un support de centrage (6) en forme de tube ou de tige qui s'étend à travers l'ouverture de passage (1f) du tube de substrat (1) et entre la première unité de pression et la seconde unité de pression.

5. Dispositif selon la revendication 4, **caractérisé en ce que** la première broche (3a) est réalisée sous forme de broche creuse comportant un premier alésage intérieur, **et en ce que** la seconde broche (3b) est réalisée sous forme de broche creuse comportant un second alésage intérieur, **et en ce que** le support de centrage (6) pénètre, avec une première extrémité (6a), dans le premier alésage intérieur et, avec une seconde extrémité (6b), dans le second alésage intérieur.

6. Dispositif selon la revendication 5, **caractérisé en ce que** l'unité de centrage comprend des éléments de centrage qui sont placés sur le support de centrage (6) à l'intérieur de l'alésage de passage de tube de substrat (1f), et dont un premier élément de centrage est disposé dans la zone de la première face frontale de tube de substrat (1a), et un second élément de centrage est disposé dans la zone de la seconde face frontale de tube de substrat (1b).

7. Dispositif selon l'une ou plusieurs des revendications 2 à 6, **caractérisé en ce que** la première unité de pression présente un premier élément de transmission de pression (4a) et un premier élément tampon (5a) relié à celui-ci de manière solidaire en rotation et constitué de préférence d'un matériau contenant du graphite, dans lequel l'élément de transmission de pression (4a) est monté ou articulé sur la première broche (3a) de manière fixe en rotation mais pivotante, et dans lequel le premier élément tampon (5a) est disposé entre l'élément de transmission de pression (4a) et le tube de substrat (1) et s'appuie contre la première face frontale de tube de substrat (1a).

8. Dispositif selon la revendication 7, **caractérisé en ce que** le premier élément tampon (5a) dépasse l'élément de transmission de pression (4a) et le tube de substrat (1) dans la direction radiale.

9. Dispositif selon l'une ou plusieurs des revendications 1 à 8, **caractérisé en ce que** la première unité de pression comprend une surface de pression s'appuyant contre la première face frontale de tube de substrat (1a), laquelle surface de pression est constituée d'un matériau contenant du graphite.

10. Dispositif selon l'une ou plusieurs des revendications précédentes, **caractérisé en ce que** le tube de substrat (1) présente une épaisseur de paroi qui est inférieure à 20 % du diamètre extérieur de tube de substrat.

11. Dispositif selon l'une ou plusieurs des revendications précédentes, **caractérisé en ce que** le moyen de maintien de tube de substrat comprend un mécanisme de compensation pour la compensation de la dilatation thermique dans la direction de l'axe longitudinal de tube de substrat (1e), **et en ce que** l'élément de force du mécanisme de pincement est de préférence un élément formant ressort (2c) et fait en même temps partie intégrante du mécanisme de compensation.

12. Dispositif selon l'une des revendications précédentes 2 à 11, **caractérisé en ce qu'**est disposé, dans la zone de l'extrémité distale de la première broche (3a) et/ou de la seconde broche (3b), au moins un élément d'appui sur lequel peut rouler la broche respective.

13. Procédé pour la fabrication d'une ébauche de SiO₂ tubulaire dans un procédé de dépôt extérieur, comportant les étapes de procédé suivantes :
(a) mise à disposition d'un tube de substrat (1) qui présente un axe longitudinal de tube de substrat (1e), une longueur de tube de substrat, une première face frontale de tube de substrat (1a), une seconde face frontale de tube de substrat (1b), une surface d'enveloppe extérieure de tube de substrat (1c), une surface d'enveloppe intérieure de tube de substrat (1d), un diamètre extérieur de tube de substrat et une ouverture de passage (1f) continue et s'étendant coaxialement à l'axe longitudinal de tube de substrat (1e),
(b) soutien du tube de substrat (1) dans un moyen de maintien de tube de substrat qui comprend un dispositif de serrage,
(c) rotation du tube de substrat (1) autour d'un axe de rotation s'étendant coaxialement ou parallèlement à l'axe longitudinal de tube de substrat (1e),
(d) dépôt de particules de SiO₂ sur la surface d'enveloppe extérieure (1c) du tube de substrat (1) au moyen d'au moins un brûleur de dépôt (8) en formant l'ébauche de SiO₂ tubulaire,
**caractérisé en ce que,** au moyen du moyen de maintien de tube de substrat, une force de pression axiale est générée sur la première face frontale (1a) et sur la seconde face frontale (1b) avec une composante de force agissant dans la direction de l'axe longitudinal de tube de substrat (1e), laquelle composante de force provoque un pincement du tube de substrat (1) entre une première unité de pression s'appuyant contre la première face frontale (1a) et une seconde unité de pression s'appuyant contre la seconde face frontale (1b).

14. Procédé selon la revendication 13, **caractérisé en ce que,** pour le soutien du tube de substrat (1) selon l'étape de procédé (b), un moyen de maintien de tube de substrat d'un dispositif selon l'une des revendications 1 à 12 est utilisé.

15. Procédé selon la revendication 13 ou 14, **caractérisé en ce qu'**un tube de substrat (1) est utilisé, lequel est constitué de SiC, SiSiC, Al₂O₃ ou d'un autre matériau céramique ou de graphite, et présente un diamètre extérieur d'au moins 250 mm, **ou en ce qu'**un tube de substrat (21) est utilisé, lequel est constitué de verre de quartz et présente un diamètre intérieur d'au moins 250 mm.
